# EUROPÄISCHE PATENTSCHRIFT

(11) **EP 2 185 398 B1**
(45) Veröffentlichungstag und Bekanntmachung des Hinweises auf die Patenterteilung: **24.10.2012**
(21) Anmeldenummer: 08829276.8
(22) Anmeldetag: 08.09.2008
(51) Int. Cl.: B62D 1/04, B62D 1/06, B62D 5/00

(54) **LENKRADBAUGRUPPE FÜR EIN KRAFTFAHRZEUG**
STEERING WHEEL MODULE FOR A MOTOR VEHICLE
ENSEMBLE VOLANT DE DIRECTION POUR VÉHICULE À MOTEUR

(30) Priorität: 06.09.2007 DE 102007043008
(43) Veröffentlichungstag der Anmeldung: 19.05.2010
(73) Patentinhaber: Takata AG, 63743 Aschaffenburg (DE)
(72) Erfinder: NEUMANN, Delf, 12555 Berlin (DE); SCHREIBER, Christian, 16356 Ahrensfelde (DE)
(74) Vertreter: Müller, Wolfram Hubertus
(86) Internationale Anmeldenummer: PCT/DE2008/001527
(87) Internationale Veröffentlichungsnummer: WO 2009/030223

(56) Entgegenhaltungen:
- DE-A1- 10 113 493
- DE-U1- 20 014 731
- DE-U1- 20 018 732
- FR-A- 2 744 976
- JP-A- 2001 055 149
- US-A- 4 835 512
- US-A1- 2006 016 244

## Beschreibung

Die Erfindung betrifft eine Lenkradbaugruppe für ein Kraftfahrzeug.

In dem Dokument JP 2001 055149 A ist eine Lenkradbaugruppe für ein Kraftfahrzeug gemäß dem Oberbegriff des Anspruchs 1 offenbart.

Das Dokument FR 2 744 976 A zeigt ein Lenkrad für ein Kraftfahrzeug, bei dem an einem Lenkradkranz eine Anzeigeeinrichtung angeordnet ist, wobei die Anzeigeeinrichtung mit einer transparenten Abdeckung überdeckt ist.

In dem Dokument DE 200 18 732 U1 wird ein Lenkrad für Kraftfahrzeuge beschrieben, bei dem ein Lenkradkranz mittels eines elektrolumineszenten Elementes beleuchtet ist.

Das Dokument DE 101 13 493 A1 beschriebt ein Lenkrad für ein Kraftfahrzeug, welches in relativ dunkler Umgebung Lichtwellen aussenden kann. Dabei ist ein Leuchtkörper in den das Lenkrad bildenden Werkstoff eingebettet, der zumindest abschnittsweise im wesentlichen transparent ausgebildet ist. Die Lichtwellen-Emission des Leuchtkörpers kann hinsichtlich Intensität und Farbe veränderbar sein, wobei der Leuchtkörper insbesondere bei beabsichtigtem Einsteigen in das Fahrzeug aktiviert wird. Auch können mittels des Leuchtkörpers an den Fahrer Informationen oder Warnsignale übermittelt werden.

In dem Dokument US 4 835 512 A ist ein Lenkrad für ein Kraftfahrzeug gezeigt, bei dem eine Anzeigeeinrichtung in eine Ausnehmung eines Lenkradkranzes eingelassen ist. Die Befestigung der Anzeigeinrichtung am Lenkradkranz erfolgt mittels einer Platte, die die Ausnehmung verschließt, wobei die Platte mittels Schrauben am Lenkradkranz befestigt ist.

In der DE 200 14 731 U1 ist ein Lenkrad für Kraftfahrzeuge offenbart, im wesentlichen bestehend aus einem Nabenteil zum Anschluss an die Lenksäule sowie vom Nabenteil abgehenden Speichen, an denen ein Lenkradkranz angeschlossen ist, wobei der Lenkradkranz zumindest teilweise aus Schaumstoff besteht oder mit Schaumstoff ummantelt ist. In das Schaumstoffmaterial ist ein Display mit LCD-Anzeige, insbesondere in Form einer Folie, oder eine Anzahl von Leuchtdioden oder Leuchtdioden-Segmentanzeigen oder andere elektrische Anzeigeteile eingebettet, wobei die so gebildeten Anzeigeteile dem Blickfeld des Lenkers des Kraftfahrzeuges zugewandt sind.

Der Erfindung liegt das Problem zu Grunde, eine Lenkradbaugruppe zu schaffen, die Komfort und Sicherheit des Kraftfahrzeuges erhöht.

Dieses Problem wird mittels einer Lenkradbaugruppe mit den Merkmalen des Anspruchs 1 gelöst.

Danach ist eine Lenkradbaugruppe für ein Kraftfahrzeug vorgesehen, mit einem Lenkrad zum Lenken des Kraftfahrzeuges, wobei das Lenkrad einen Lenkradkranz aufweist, über den es betätigt werden kann, und einer am Lenkradkranz angeordneten Anzeigeeinrichtung zum Anzeigen von Fahrinformationen, wobei die Anzeigeeinrichtung über Befestigungsmittel an dem Lenkradkranz befestigt ist, und wobei der Lenkradkranz einen Grundkörper (Skelett) aufweist, der zumindest teilweise von einem Material (Umhüllung, z.B. aus Schaum, Leder oder Kunstleder) umgeben ist, das insbesondere weicher ist als das Material des Grundkörpers, und wobei die Anzeigeeinrichtung über die Befestigungsmittel an dem Grundkörper befestigt ist, und wobei die Befestigungsmittel zumindest einen am Grundkörper ausgebildeten Befestigungsbereich (Befestigungsstruktur) umfassen.

Erfindungsgemäß steht der mindestens eine Befestigungsbereich (Befestigungsstruktur) vom Grundkörper ab und weist mindestens eine Durchgangsoffnung auf, insbesondere in Form einer Bohrung, zum Herstellen einer form- und/oder kraftschlüssigen Verbindung zwischen der Anzeigeeinrichtung und dem Grundkörper, wobei der mindestens eine Befestigungsbereich quer zur Erstreckungsrichtung des Lenkrades fortsatzartig in Richtung auf einen Nabenkörper des Lenkrades absteht. Oder anders gesagt, die Befestigungsstrukturen können ösenartig ausgebildet sein und mindestens eine Bohrung zum Herstellen der besagten Verbindung aufweisen.

Zum Schutz der Komponenten der Anzeigeeinrichtung weist diese eine obere erste Schale mit einer nach außen weisenden sichtbaren Oberfläche auf, die - bezogen auf einen Einbauzustand der Lenkradbaugruppe - einem Fahrer zugewandt ist. Die Anzeigeeinrichtung weist zumindest eine Anzeige zur Erzeugung optischer Signale auf, wobei die obere erste Schale bevorzugt einen Ausschnitt oder einen transparenten oder einen transluzenten Bereich aufweist, so dass die unter der Schale angeordnete Anzeige, bzw. die erzeugten optischen Signale sichtbar sind. Transluzenz bedeutet lichtdurchlässig bzw. lichtteildurchlässig, im Gegensatz zu transparent, das eine Blick- und Bilddurchlässigkeit bezeichnet.

Besonders bevorzugt ist die obere erste Schale mittels eines die Durchgangsöffnung des Befestigungsbereiches des Grundkörpers durchgreifenden Stiftes am Grundkörper festgelegt ist, wobei der Stift insbesondere als Schraube ausgebildet ist. Auf diese Weise wird eine stabile Verbindung zwischen der besagten Schale und dem Grundkörper hergestellt, die verhindert, dass jene Schale (und die Anzeigeeinrichtung) entlang einer quer zur Umfangsrichtung (Erstreckungsrichtung) des Lenkradkranzes verlaufenden Richtung und entlang der Umfangsrichtung des Lenkradkranzes, entlang der der Lenkradkranz umläuft, verrutschen kann.

Weiterhin ist bevorzugt eine untere Schale mit einer nach außen weisenden sichtbaren Oberfläche vorgesehen, die der Oberfläche der oberen ersten Schale abgewandt ist, wobei vorzugsweise auch jene untere Schale mittels des besagten Stiftes an der oberen ersten Schale festgelegt ist, so dass die beiden ersten Schalen den Grundkörper im Querschnitt umgreifen, und zwar in einer Querschnittsebene, die senkrecht auf der Umfangs- bzw. Erstreckungsrichtung des Grundkörpers steht.

Weiterhin können die Befestigungsmittel zum Befestigen der Anzeigeeinrichtung am Grundkörper des Lenkradkranzes durch einen entfernbaren Klebstoff gebildet sein bzw. einen solchen Klebstoff umfassen.

Zum Verhindern einer Relativbewegung zwischen der Anzeigeeinrichtung und dem Grundkörper umfassen die besagten Befestigungsmittel vorzugsweise des weiteren eine Clipverbindung zwischen der Anzeigeeinrichtung und dem Grundkörper, oder anders gesagt, die Befestigungsmittel umfassen Strukturen der Anzeigerichtung, über die eine Clipverbindung der Anzeigeeinrichtung mit dem Lenkrad, insbesondere mit dem Grundkörper, besteht.

Zum Tragen von Komponenten der Anzeigeeinrichtung weist die Anzeigeeinrichtung bevorzugt mindestens einen Schaltungsträger (Platine) auf, der vorzugsweise mittels der besagten Clipverbindung an dem Lenkradkranz, insbesondere dem Grundkörper des Lenkradkranzes, festgelegt ist.

Vorzugsweise weist die Anzeigeeinrichtung Dämpfungsmittel zum Dämpfen mechanischer Schwingungen des mindestens einen Schaltungsträgers auf, wobei jene Dämpfungsmittel dazu eingerichtet und vorgesehen sind, einem Gegeneinanderschwingen der Anzeige und des Schaltungsträgers entgegenzuwirken. Dabei umfassen die Dämpfungsmittel vorzugsweise je ein mechanisch dämpfendes Material, welches zwischen der Anzeige und dem Schaltungsträger angeordnet ist. Dämpfungsmittel können auch zwischen weiteren Komponenten der Anzeigeeinrichtung vorgesehen sein.

Um den Grundkörper des Lenkradkranzes im Bereich der Anzeigeeinrichtung vorteilhaft verkleiden zu können, ist weiterhin eine obere zweite und eine obere dritte Schale vorgesehen, die jeweils eine nach außen gewandte Oberfläche aufweisen, wobei diese Oberflächen - bezogen auf einen bestimmungsgemäß in ein Kraftfahrzeug eingebauten Zustand der Lenkradbaugruppe - einem Fahrer zugewandt sind.

Dabei ist die obere erste Schale vorzugsweise entlang der Erstreckungsrichtung (Umfangsrichtung) des Lenkradkranzes zwischen der oberen zweiten und der oberen dritten Schale angeordnet, wobei die obere zweite Schale und die obere dritte Schale bevorzugt jeweils mit der unteren Schale verbunden sind, so dass die obere zweite Schale und die obere dritte Schale jeweils zusammen mit der unteren Schale den Grundkörper im Querschnitt umgeben.

Hierbei ist es möglich, die obere zweite und dritte Schale zumindest teilweise in eine weitere Umhüllung des Lenkrades bzw. des Lenkradkranzes mit einem Leder oder einem sonstigen Bezug einzubeziehen. Hierdurch wird mit Vorteil ein kaschierter Übergang zwischen einem Bereich mit großen Fertigungstoleranzen (nämlich der Umschäumung des Grundkörpers als eine erste Umhüllung) und der oberen zweiten und dritten Schale und dem Anzeigebereich (Anzeigeeinrichtung), die sich fertigungstechnisch durch relativ geringe Toleranzen auszeichnet, geschaffen.

Ein Verfahren zum Herstellen einer Lenkradbaugruppe, insbesondere nach Art einer der vorstehenden Lenkradbaugruppen weist die Schritte auf:
- Umgeben eines Grundkörpers (Lenkradgrundkörper) eines Lenkradkranzes mit einer Grundkörperumhüllung (z.B. einer Umschäumung des Grundkörpers - auch bezeichnet als Lenkradskelett), derart, dass die Grundkörperumhüllung eine Aussparung (Ausnehmung) aufweist,
- Anordnen eines ersten Bauteils insbesondere in Form einer unteren Schale am Grundkörper in der Aussparung bzw. im Bereich der Aussparung,
- Vorzugsweise Anordnen eines zweiten und dritten Bauteils in Form einer zweiten oberen und einer dritten oberen Schale im Bereich der Aussparung an einer Seite des Grundkörpers, die dem ersten Bauteil abgewandt ist,
- Anordnen einer Anzeigeeinrichtung zum Anzeigen von Fahrinformationen in der Aussparung, und
- Verbinden eines Abdeckteiles, insbesondere in Form einer oberen ersten Schale der Anzeigeeinrichtung mit der unteren Schale.

Vorzugsweise wird das zweite Bauteil einem ersten Ende des Abdeckteiles entlang einer Erstreckungsrichtung des Grundkörpers gegenüberliegend angeordnet, wobei bevorzugt das dritte Bauteil einem zweiten Ende des Abdeckteiles entlang der Erstreckungsrichtung gegenüberiiegend angeordnet wird, wobei sich die beiden Enden vorzugsweise entlang der Erstreckungsrichtung einander gegenüber liegen. Oder anders gesagt, das zweite Bauteil wird einem ersten Ende des ersten Bauteils gegenüberliegend angeordnet, und das dritte Bauteil wird einem zweiten Ende, das entlang des Grundkörpers dem ersten Ende gegenüberliegt, gegenüberliegend angeordnet.

Weiterhin wird bei dem Verfahren bevorzugt vor dem Anordnen der Anzeigeeinrichtung eine weitere Umhüllung, insbesondere aus einem Leder, angeordnet, die zumindest abschnittsweise die Grundkörperumhüllung sowie die untere Schale (erstes Bauteil) umgibt.

Die weitere Umhüllung umgibt dabei vorzugsweise zumindest abschnittsweise die Grundkörperumhüllung sowie die untere Schale (erstes Bauteil), die obere zweite und die obere dritte Schale (zweites und drittes Bauteil).

Oder anders gesagt, in einer Weiterbildung des Verfahrens wird vor dem Anordnen der Anzeigeeinrichtung eine weitere Umhüllung (z.B. aus Leder) angeordnet, die zumindest abschnittsweise die Grundkörperumhüllung sowie das erste Bauteil umgibt. In einer Variante umgibt die weitere Umhüllung zusätzlich das zweite und das dritte Bauteil. Grundsätzlich ist auch möglich, dass die weitere Umhüllung nach dem Anordnen der Anzeigeeinrichtung angebracht wird.

Vorzugsweise weist die Lenkradbaugruppe mindestens eine elektrische Verbindungseinheit auf zum elektrischen Verbinden der Anzeigeeinrichtung mit einer Baugruppe des Kraftfahrzeuges, sowie mit mindestens einem Anschlusselement (z.B. Stecker), über das die Anzeigeeinrichtung elektrisch an die Verbindungseinheit angeschlossen ist.

Bevorzugt ist das Anschlusselement im Bereich der Anzeigeeinrichtung an dem Lenkradkranz festgelegt, und die Verbindungseinheit weist bevorzugt eine elektrische Leitung auf, die sich von dem Bereich der Anzeigeeinrichtung zu einem Nabenbereich des Lenkrads hin erstreckt. Dabei ist jene elektrische Leitung vorzugsweise entlang des Lenkradkranzes geführt.

Zur vorteilhaften Leitungsführung weist der Grundkörper des Lenkradkranzes, der insbesondere zumindest teilweise von der Grundkörperumhüllung umgeben ist, bevorzugt eine Aussparung (Nut) auf, in die die elektrische Leitung zumindest abschnittsweise eingelegt ist. Eine Breite jener Aussparung quer zur Umfangsrichtung des Lenkradkranzes bzw. Grundkörpers, d.h., entlang der radialer Richtung des Lenkrades, ist zumindest abschnittsweise kleiner als der Außendurchmesser der elektrischen Leitung vor ihrem Einlegen in die Aussparung, so dass die eingelegte Leitung in der Aussparung eingeklemmt ist. Es ist natürlich auch möglich, dass der Grundkörper Bereiche aufweist, die derart in die Aussparung hinein stehen, dass die Leitung jene Bereiche hintergreifen kann und daher in der besagten Aussparung gehalten wird. Die Aussparung weist also verzugsweise mindestens eine Struktur auf, die einem Herausrutschen der Leitung aus der Aussparung entgegenwirkt.

Bevorzugt weist auch die Umhüllung eine Aussparung auf, durch die die Leitung zumindest abschnittsweise geführt ist. Dabei ist jene Aussparung vorzugsweise mit einem Verschlusselement verdeckt, so dass sich die Leitung nicht durch die Umhüllung hindurch nach außen abzeichnet bzw. haptisch spürbar ist.

Bevorzugt ist eine Steuereinheit zum Ansteuern der Anzeigeeinrichtung in das Lenkrad integriert.

Die Steuereinheit kann zudem dazu ausgebildet sein, weitere Elemente des Lenkrads anzusteuern, insbesondere ein Heizelement, Mittel zum Bestimmen des Lenkwinkels, ein Betätigungselement zum Bedienen einer Fahrzeugkomponente oder im Lenkrad angeordnete Aktuatoren, z.B. für eine Aktivlenkung.

Bevorzugt ist des weiteren ein Licht aussendendes Element der Anzeigeeinrichtung sowie ein Reflektorelement zum zumindest teilweisen Reflektieren des vom Licht aussendenden Element ausgesandten Lichtes vorgesehen.

Beispielsweise ist das Reflektorelement so ausgebildet und angeordnet, dass es eine - im Vergleich zum Licht aussendenden Element ohne das Reflektorelement - uniformere Intensitätsverteilung des vom Licht aussendenden Element ausgesandten Lichtes in einer Ebene senkrecht zu dessen optischer Achse bewirkt. Insbesondere wird in einer Ausgestaltung des Reflektormittels eine bessere Ausleuchtung von Randbereichen des Abstrahlbereiches des Licht aussendenden Elementes erreicht. Bevorzugt handelt es sich bei dem Licht aussendenden Element der Anzeigeeinrichtung, um eine LED.

Besonders bevorzugt wird eine uniforme Intensitätsverteilung entlang einer senkrecht zur optischen Achse orientierten (begrenzten) Fläche bewirkt, die insbesondere längs erstreckt rechteckförmig ausgebildet ist (Leuchtstreifen).

Vorzugsweise weist das Reflektormittel hierzu bevorzugt eine Wandung in Form einer gekrümmten, reflektierenden Fläche auf.

Weiterhin weist die Anzeigeeinrichtung vorzugsweise eine Anzeige zur Erzeugung eines optischen Signals zur Darstellung von Fahrinformationen auf einer einem Betrachter zugewandten Anzeigeseite der Anzeige auf. Diesbezüglich ist der Lenkradkranz vorzugsweise derart ausgebildet, dass Umgebungslicht zur Hintergrundbeleuchtung der Anzeige auf eine der Anzeigeseite abgewandte Seite der Anzeige (z.B. LCD) gelangen kann.

Alternativ oder zusätzlich hierzu ist der Lenkradkranz bevorzugt derart ausgebildet, dass Umgebungslicht zur Hintergrundbeleuchtung von der dem Betrachter zugewandten Anzeigeseite auf eine der Anzeigeseite abgewandte Seite der Anzeige gelangen kann.

Des weiteren ist zum Zwecke der Hintergrundbeleuchtung bevorzugt vorgesehen, dass der Grundkörper zumindest teilweise von einer Umhüllung umgeben ist, die im Bereich der Anzeige ein transparentes Material aufweist, so dass in diesem Bereich Umgebungslicht durch die Umhüllung des Lenkradkranzes hindurch zur Anzeige gelangen kann. Bevorzugt ist hierzu das besagte transparente Material in einem bestimmungsgemäß in ein Kraftfahrzeug eingebauten Zustand der Lenkradbaugruppe der Fahrzeugfrontscheibe zugewandt.

Weiterhin kann der Lenkradkranz einen Grundkörper aufweisen, der Hohlräume, Schlitze oder transparente Materialien zur direkten Lichtdurchleitung vorsieht, so dass in diesem Bereich Umgebungslicht durch jene Hohlräume, Schlitze oder transparenten Materialien hindurch zur Anzeige gelangen kann.

Zusätzlich kann der Lenkradkranz mit Licht führenden Strukturen und/oder Materialien ausgestattet sein, um Umgebungslicht zur Anzeige zu leiten.

In einer weiteren Variante ist alternativ oder ergänzend eine Lichtquelle zur Hintergrundbeleuchtung der Anzeige vorgesehen, die auf einer der Anzeigeseite abgewandten Seite der Anzeige angeordnet ist.

Alternativ hierzu ist die Anzeige als selbstleuchtendes Display ausgebildet, insbesondere in Form eines OLED.

Der Lenkradkranz kann so gestaltet sein, dass Umgebungslicht zur Hintergrundbeleuchtung auf die der Anzeigeseite abgewandte Seite der Anzeige gelangen kann.

Insbesondere kann es sich bei den vorstehenden Anzeigen (Displays) um ein transflexives Display handein, das Licht durch eine Vorderseite durchlässt und an einer Rückseite zur Hintergrundbeleuchtung reflektiert.

Zudem kann der Lenkradkranz einen Grundkörper aufweisen, der zumindest teilweise von einer Umhüllung umgeben ist, die im Bereich der Anzeige ein transparentes Material aufweist, so dass in diesem Bereich Umgebungslicht durch die Umhüllung hindurch zur Anzeige gelangen kann. Das transparente Material kann z.B. auch farbig sein und beliebige Oberflächenstrukturen haben, z.B. auch einen Lichtleitkanal zur Leitung von Umgebungslicht aufweisen.

Die Erfindung wird im Folgenden anhand von Ausführungsbeispielen unter Bezugnahme auf die Figuren näher erläutert. Es zeigen:
- Fig. 1:: eine Explosionsansicht einer Anzeigeeinrichtung einer Lenkradbaugruppe,
- Fig. 2:: eine ausschnitthafte, perspektivische Ansicht eines Grundkörpers eines Lenkradkranzes und eine daran angeordnete untere Schale einer Anzeigeeinrichtung der in der Figur 1 gezeigten Art,
- Fig. 3 - 4:: perspektivische, ausschnitthafte Ansichten einer Anzeigeeinrichtung der in der Figur 1 gezeigten Art, die über eine Clipsverbindung mit dem Grundkörper verbunden ist,
- Fig. 5 - 6:: ausschnitthafte Ansichten einer Anzeigeeinrichtung nach Art der Figur 1, dessen Anzeige über eine elastische Befestigung mit dem Grundkörper verbunden ist,
- Fig. 7:: eine Explosionsansicht eines Lenkradkranzes mit abschnittsweise freiliegendem Grundkörper, an dem die gezeigte Anzeigeeinrichtung gemäß Figur 1 festzulegen ist,
- Fig. 8:: eine ausschnitthafte, perspektivische Ansicht eines Lenkrades, mit einer elektronischen Verbindung zwischen dem Nabenkörper und einem am oberen Lenkradkranz vorgesehenen Einbauort einer Anzeigeeinrichtung gemäß Figur 1,
- Fig. 9-15:: schematische Schnittansichten eines Lenkradkranzes nach Art der Figur 8, mit unterschiedlichen Befestigungsmitteln für die elektronische Verbindung,
- Fig. 16:: ein schematisches Blockdiagramm einer erfindungsgemäßen Steuereinheit (ECU),
- Fig. 17:: eine schematische Draufsicht auf eine erfindungsgemäße Anzeigeeinrichtung mit einem Reflektormittel für ein Licht aussendendes Element (z.B. LED),
- Fig. 18:: einen Schnitt entlang der Linie A-A der Figur 17,
- Fig. 19:: eine schematische, perspektivische Ansicht des in der Figur 17 gezeigten Reflektormittels,
- Fig. 20 - 21:: Details der Figur 18,
- Fig. 22 - 24:: perspektivische Ansichten von Lenkrädern und daran zu befestigende Anzeigeeinrichtungen,
- Fig. 25 - 30:: perspektivische Ansichten eines Lenkrades in verschiedenen Stadien der Herstellung,
- Fig. 31 - 36:: ausschnitthafte Draufsichten auf erfindungsgemäße Anzeigeeinrichtungen,
- Fig. 37:: eine schematische Schnittansicht eines Lenkradkranzes und einer daran montierten Anzeigeeinrichtung mit einer Anzeige in Form eines selbstleuchtenden Displays,
- Fig. 38:: eine schematische Schnittansicht eines Lenkradkranzes und einer daran montierten Anzeigeeinrichtung mit einer Anzeige in Form eines hintergrundbeleuchteten Displays,
- Fig. 39:: eine ausschnitthafte Draufsicht auf eine erfindungsgemäße Anzeigeeinrichtung mit einer transiuzenten oberen ersten Schale,
- Fig. 40:: ein schematische Ansicht eines Leuchtbalken für eine Anzeige einer erfindungsgemäßen Anzeigeeinrichtung, und
- Fig. 41:: eine schematische Garstellung von LED-Lichtleitern ("Lightguides") für eine Anzeige einer erfindungsgemäßen Anzeigeeinrichtung.

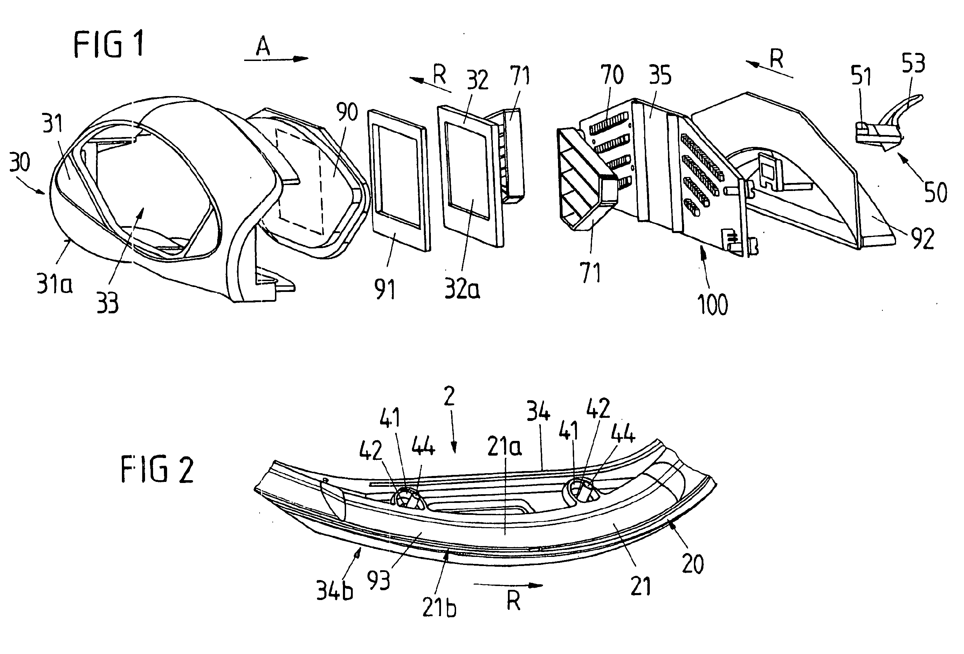

Figur 1 zeigt (im Zusammenhang mit Figur 2) den Aufbau einer erfindungemäßen Anzeigeeinrichtung 30 einer Lenkradbaugruppe 1 in einer Explosionsansicht. Danach weist die Anzeigeinrichtung 30 ein Abdeckteil 31 - auch als obere erste Schale 31 bezeichnet - auf. Jene Schale 31 kann insbesondere aus den Materialien PC, ABS, Holz, Metall etc. gefertigt sein und weist - bezogen auf einen bestimmungsgemäß in ein Lenkrad 2 eingebauten Zustand der Anzeigeeinrichtung 30 - eine nach außen weisende, einem Fahrer zugewandte Oberfläche 31a auf, die eine Designfläche bildet. Die obere erste Schale 31 weist ferner eine durchgängige Ausnehmung 33 (Ausschnitt 33) auf, durch die hindurch eine Anzeige 32, die zur Darstellung von Informationen dient, sichtbar ist. Bei der Anzeige 32 kann es sich insbesondere um ein OLED, TFT, LCD oder ein sonstiges Display handeln.

Bezogen auf den besagten Einbauzustand (der nachfolgend vorausgesetzt sein soll) ist entlang einer senkrecht zur Erstreckungsebene der oberen ersten Schale 31 stehenden Aufbaurichtung A zwischen der oberen ersten Schale 31 und der besagten Anzeige 32 eine durchsichtige Scheibenabdeckung 90 angeordnet, die den besagten Ausschnitt 33 verschließt und vorzugsweise kratzfest und entspiegelt ist, sowie des weiteren bevorzugt gegen ein Beschlagen beschichtet ist. Bevorzugt besteht jene Scheibenabdeckung 90, die sich entlang der oberen ersten Schale 31 erstreckt, aus PC, ABS, PMMA oder PU.

Die Scheibenabdeckung 90 und die obere erste Schale 31 können natürlich auch als einheitliches Teil vorliegen, d.h., sie können einstückig aneinander angeformt sein.

Weiterhin ist entlang der besagten Aufbaurichtung A zwischen der Scheibenabdeckung 90 und der Anzeige 32 eine rahmenförmige Dichtung 91 angeordnet. Dabei umläuft die Dichtung 91 eine dem Fahrer zugewandte Anzeigeseite 32a der Anzeige 32, über die Informationen (optische Signale) anzeigbar sind, um die Anzeige 32 bzw. Anzeigeseite 32a vor Staub und Feuchtigkeit zu schützten. Hierbei liegt die Scheibenabdeckung 90 über jene Dichtung 91 an der Anzeige 32 an, wobei die Scheibenabdeckung 90 gegen die Dichtung 91 vorgespannt ist, so dass die Dichtung 91 sowohl an der Anzeige 32 als auch an der Scheibenabdeckung 90 abdichtend anliegt.

Die von der rahmenförmigen Dichtung 91 eingeschlossene Fläche entspricht in ihrer Projektion auf die Scheibenabdeckung 90 deren Bereich mit einer hohen Lichtdurchiässigkeit bzw. geringen Streuung (Sichtbereich auf die Anzeige 32). Die daran angrenzenden Randbereiche weisen eine geringere Lichtdurchlässigkeit bzw. haben eine vergleichsweise stark streuende Wirkung.

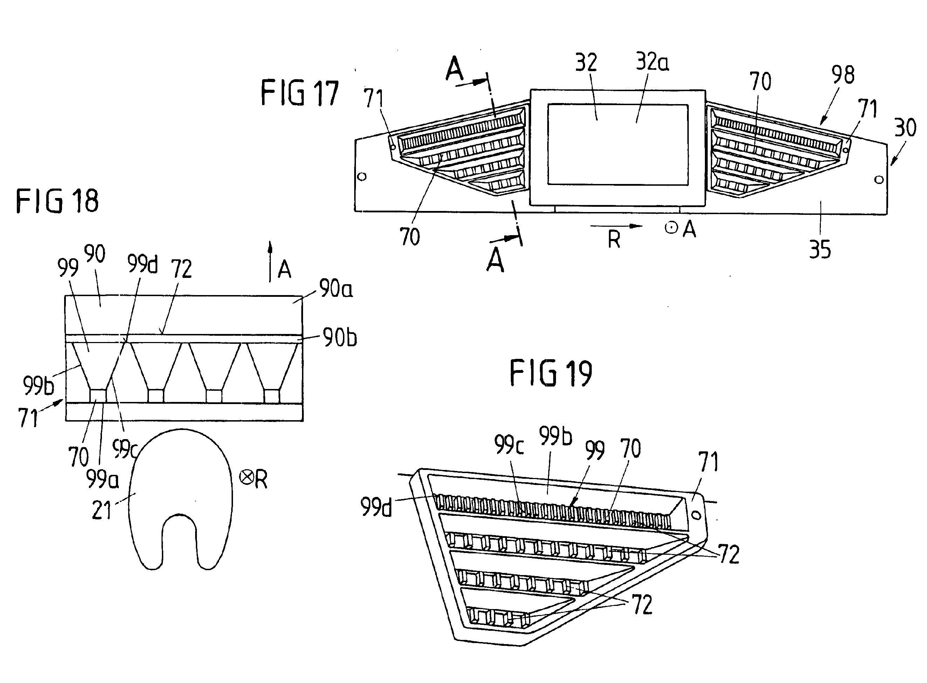

Die Anzeige 32 erstreckt sich entlang einer Erstreckungsrichtung R des Lenkradkranzes 20 und ist dort bezogen auf die Geradeausfahrtrichtung in der 12-Uhr-Position angeordnet. Entlang der besagten Erstreckungsrichtung R ist zu beiden Seiten ein Reflektormittel 71 angeordnet, das dazu eingerichtet und vorgesehen ist, durch LEDs 70 erzeugtes Licht so zu beeinflussen, dass mittels besagter LEDs 70 auf der Scheibenabdeckung 90 entlang der Erstreckungsrichtung R erstreckte streifenförmige, homogen ausgeleuchtete Bereiche 72 sichtbar sind. Hierzu erstreckt sich die besagte Scheibenabdeckung 90 mit ihren Bereichen geringerer Lichtdurchlässigkeit bzw. starker Streuung, in der Aufbaurichtung A gesehen, vor jenen Reflektormitteln 71 und darin angeordneten LEDs 70. Zur stärkeren Abgrenzung der streifenförmigen Bereich 72 untereinander auf der Scheibenabdeckung 90 können in bzw. auf dieser zusätzlich Trennbereiche vorgesehen sein, die eine sehr geringe Lichtdurchlässigkeit aufweisen. Der besagte Ausschnitt 33 der oberen ersten Schale 31 ist so gestaltet, dass auch die LEDs 70 bzw. die im Wesentlichen homogen beleuchteten Bereiche 72 (Leuchtstreifen) auf der Scheibenabdeckung 90 durch den Ausschnitt 33 hindurch für einen Fahrer sichtbar sind. Vorzugsweise sind die Reflektormittel 71 aus PC, ABS oder beschichtetem Kunststoff gefertigt. Die Scheibenabdeckung 90 kann im Bereich der Reflektormittel 71 mehrere Schichten aufweisen, insbesondere eine beschichtete Blende 90a sowie eine diffuse Folie 90b oder Beschichtung der Blende, die entlang der Aufbaurichtung A zwischen den Reflektormitteln 71 und der beschichteten Blende 90a angeordnet ist (vgl. Figur 18).

Die Anzeige 32 und die beiden Reflektormittel 71 sowie darin angeordnete LEDs 70 sind nebst einer zentralen Steuereinheit 100 zum Steuern der Anzeigeeinrichtung 30 auf einem Schaltungsträger 35 festgelegt, der zum Tragen dieser Komponenten dient und des weiteren eine elektronische Verbindung zwischen den Komponenten der Anzeigeeinrichtung 30 bereitstellt.

Zum Schutz des Schaltungsträgers 35 ist des Weiteren eine untere Abdeckung 92 vorgesehen, die sich entlang der besagten Aufbaurichtung A zwischen dem Schaltungsträger 35 und dem Grundkörper 21 entlang der Erstreckungsrichtung R erstreckt. Diese untere Abdeckung 92 besteht vorzugsweise aus PC oder ABS.

Zur elektronischen Verbindung der Anzeigeeinrichtung 30, insbesondere der Steuereinheit 100 der Anzeigeeinrichtung 30 mit einem fahrzeugseitigen Netz (insbesondere zur Spannungsversorgung und zur Übermittlung von Steuersignalen), ist ein Anschlusselement 51 und eine damit verbundene elektrische Verbindungseinheit 50 vorgesehen, wobei jene verbindungseinhelt 50 eine elektrische Leitung 53 umfasst, die zur Anordnung in einer Umhüllung 22 (Grundkörperumhüllung) eines Grundkörpers 21 des Lenkradkranzes 20 eingerichtet und vorgesehen ist. Die Leitung 53 kann eine Mehrzahl einzelner Adern aufweisen.

Zum Befestigen der Anzeigeeinrichtung 30 an einem Grundkörper 21 eines Lenkradkranzes 20 ist schließlich eine untere Schale 34 vorgesehen, mit einer nach außen gewandten Oberfläche 34b die dem Fahrer abgewandt ist, wobei jene untere Schale 34 vorzugsweise an einer dem Fahrer bzw. der Anzeige 32 abgewandten Seite 21 b des Grundkörpers 21 angeordnet ist (vgl. Figur 2). Die untere Schale 34 kann insbesondere von einer äußeren, sichtbaren Umhüllung 25 des Lenkradkranzes 20 - auch bezeichnet als weitere Umhüllung 25 -, die insbesondere aus einem Leder bestehen kann, bedeckt sein. Vorzugsweise besteht eine solche untere Schale aus PC oder ABS.

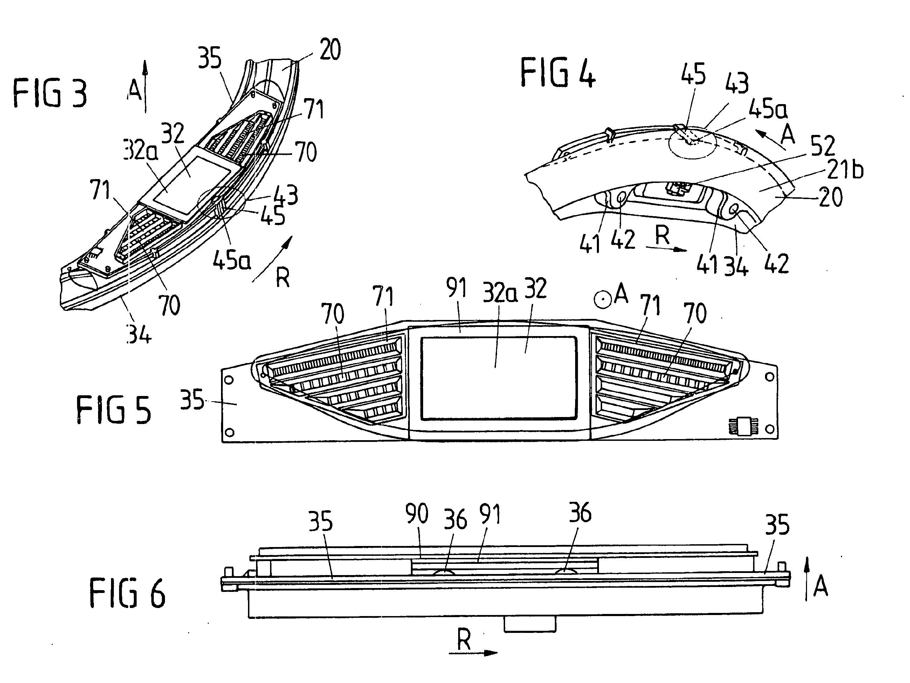

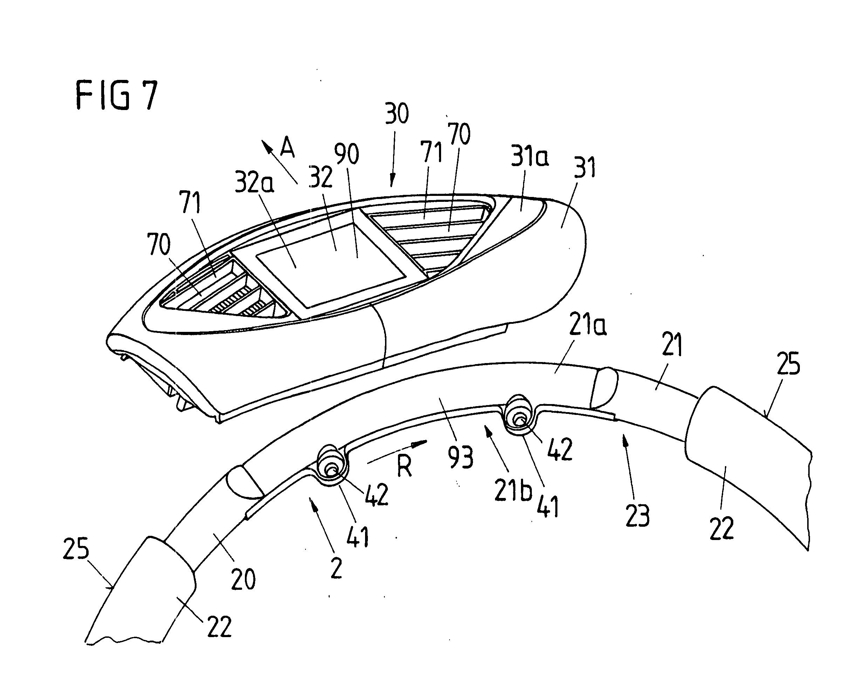

Figur 2 zeigt im Zusammenhang mit den Figuren 3 bis 7 die Befestigung der Anzeigeeinrichtung 30 an einem Lenkradkranz 20 eines Lenkrades 2, der entlang einer Erstreckungsrichtung R (Umfangsrichtung) umläuft. Der Lenkradkranz 20 weist dabei einen entlang der Erstreckungsrichtung R umfaufenden Grundkörper 21 als ein Grundgerüst des Lenkradkranzes 20 auf. Der Grundkörper 21 besteht vorzugsweise aus einem Metall, kann aber auch aus einem Kunststoff gefertigt sein. Der Lenkradkranz 20 weist des weiteren eine Umhüllung 22 aus einem Material auf, das vorzugsweise eine höhere Elastizität als der Grundkörper 21 aufweist, wobei jene Umhüllung 22 den Grundkörper zumindest abschnittsweise entlang der Erstreckungsrichtung R umgibt, d.h., im Querschnitt umgreift, und auch als Grundkörperumhüllung 22 bezeichnet wird. Der Lenkradkranz 20 weist schließlich eine weitere Umhüllung 25 mit einer nach außen gewandten sichtbaren Oberfläche auf, die auf die Grundkörperumhüllung 22 aufgebracht ist und diese entlang der Erstreckungsrichtung R zumindest abschnittsweise umgibt. Bei dieser weiteren Umhüllung 25 handelt es sich vorzugsweise um eine Belederung des Lenkradkranzes 20.

Die Grundkörperumhüllung 22 weist zum Festlegen der Anzeigeeinrichtung 30 am Lenkrad 2 eine entlang der Erstreckungsrichtung R erstreckte Unterbrechung auf, die sich bezogen auf eine Geradeausfahrtsellung des Lenkradkranzes 20 in der 12-Uhr-Position befindet, so dass ein Abschnitt 93 des Grundkörpers 21 nicht durch jene Grundkörperumhüllung 22 bedeckt ist. Von diesen Abschnitt 93 stehen quer zur Erstreckungsrichtung R zwei Befestigungsstrukturen in Form zweier Befestigungsbereiche 41 fortsatzartig ab, und zwar in Richtung auf einen Nabenkörper 94 des Lenkrades 2, der über zumindest eine Speiche 95 des Lenkrades 2 mit dem Lenkradkranz 20 verbunden ist. Die beiden Befestigungsbereiche 41 sind entlang der Erstreckungsrichtung R zueinander beabstandet angeordnet und weisen je eine Durchgangsöffnung 42 (z.B. in Form einer Bohrung) auf, deren Öffnungsebene senkrecht zur Lenkachse des Lenkrades 2 verläuft.

Durch die besagten Durchgangsöffnungen 42 wird je ein Befestigungsmittel, z.B. in Form einer Schraube 44 geführt (vgl. Figur 2), das die untere Schale 34 und die obere erste Schale 31 der Anzeigeeinrichtung 30 miteinander verbindet. Hierzu sind vorzugsweise an der oberen ersten Schale 31 zwei entsprechende Gewinde vorgesehen, die Schraubenköpfe liegen an einer dem Grundkörper 21 abgewandten Seite 34b der unteren Schale 34 an der unteren Schale 34 an. Somit können die beiden besagten Schalen 31, 34 mittels der Schrauben 44 gegeneinander gedrückt werden. Da die beiden Schrauben 44 (Befestigungsmittel) die am Grundkörper 21 ausgebildeten Durchgangsöffnungen 42 durchgreifen, ist die Anzeigeeinrichtung 30 verdrehsicher am Grundkörper 21 festgelegt. Des Weiteren kann mittels der besagten Befestigungsmittel 41, 42, 44 natürlich auch der Schaltungsträger 35 zwischen den beiden Schalen 31, 34 festgelegt werden sowie die Dichtung 91 zwischen der Scheibenabdeckung 90 und der Anzeige 32 entlang der Aufbaurichtung A vorgespannt werden.

Alternativ oder ergänzend zur oben dargestellten Schraubverbindung 44 kann die Anzeigeeinrichtung 30 über lösbare Klebstoffe, die z.B. durch Anwendung von Ultraschall oder Wärme lösbar sind, am Grundkörper 21 bzw. am Lenkradkranz 20 festgelegt werden. Bei durch Erwärmung lösbaren Klebstoffen kann beispielsweise ein Heizdraht im Bereich der Klebeverbindung vorgesehen werden, dessen Wärme die Klebeverbindung löst. Solche lösbaren Verbindungen ermöglichen den Zugang zu den Komponenten der Anzeigeeinrichtung für Servicezwecke.

Um Biegungen und Schwingungen des Schaltungsträgers 35 in Bezug auf den Grundkörper 21 zu unterdrücken, kann der Schaltungsträger 35 gemäß Figur 3 zusätzlich über eine Clipverbindung 43 mit dem Grundkörper 21 verbunden sein. Hierzu steht vorzugsweise ein Rasthaken 45 entlang der Aufbaurichtung A vom Schaltungsträger 35 in Richtung auf den Grundkörper 21 ab und greift mit einem freien Endbereich 45a in eine am Grundkörper 21 vorgesehene Ausnehmung ein, so dass der Schaltungsträger 35 zumindest entlang der Aufbaurichtung A bezüglich des Grundkörpers 21 arretiert ist.

Weiterhin ist die Anzeige 32 wegen ihrer Steifheit im Vergleich zum Schaltungsträger 35 und der entsprechenden unterschiedlichen Eigenmoden (Resonanzfrequenzen) gemäß Figur 6 vorzugsweise elastisch mit dem Schaltungsträger 35 verbunden, und zwar vorzugsweise über Dämpfungsmittel 36, die entlang der Aufbaurichtung A zwischen der Anzeige 32 und dem Schaltungsträger 35 angeordnet sind. Diese Dämpfungsmittel 36 können natürlich aus einem Klebstoff bestehen, der im ausgehärteten Zustand elastische Eigenschaften aufweist. Zur Entkopplung der Anzeige 32 von benachbarten Komponenten der Anzeigeeinrichtung 30 trägt ebenfalls die elastische, rahmenförmige Dichtung 91 bei.

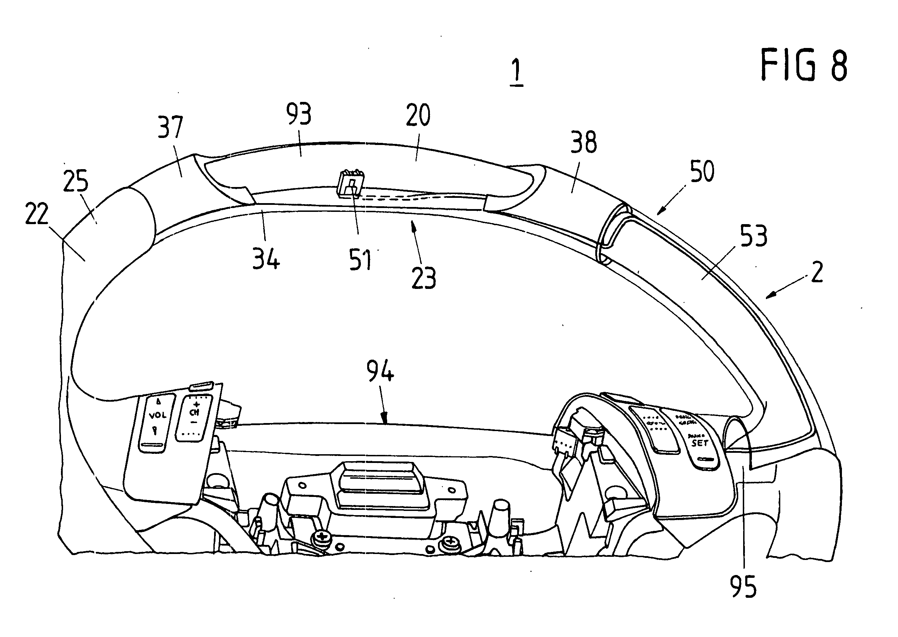

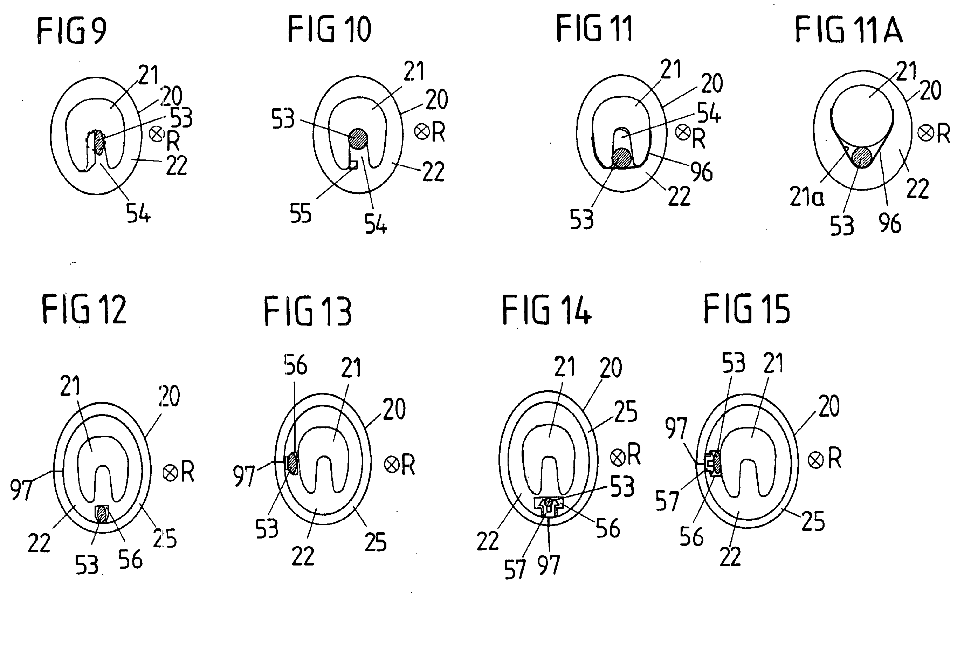

Die Figur 8 zeigt im Zusammenhang mit den Figuren 9 bis 15 die elektronische Verbindung der Anzeigeeinrichtung 30 mit einer, bzw. mehreren Fahrzeugkomponente, deren Funktionen und Parameter mittels der Anzeigeeinrichtung dargestellt werden sollen. Allgemein können über eine solche Verbindungseinheit 50 Signale zwischen der Anzeigeeinrichtung 30, insbesondere einer Steuereinheit 100 der Anzeigeeinrichtung 30, und einer fahrzeugseitigen Elektronik oder einer weiteren im Lenkrad 2 angeordneten Elektronik (z.B. im Nabenkörper 94) ausgetauscht werden. Hierzu weist die Verbindungseinheit 50 eine elektrische Leitung 53 auf, die eine Busleitung umfassen kann. Weiterhin kann die elektrische Leitung 53 der Verbindungseinheit 50 auch zur Bereitstellung einer Versorgungsspannung für die Anzeigeeinrichtung 30 (Steuereinheit) dienen und entsprechende Adern aufweisen.

Gemäß Figur 8 weist die Verbindungseinheit 50 ein mit der elektrischen Leitung 53 elektrisch leitfähig verbundenes Anschlusselement 51 in Form eines Steckers auf, der fest am besagten, nicht umhüllten Abschnitt 93 des Grundkörpers 21 festgelegt ist oder alternativ an der unteren Schale 34. An der Anzeigeeinrichtung 30 (z.B. am Schaltungsträger 35 im Zusammenspiel mit der unteren Abdeckung 92) sind entsprechende Kontakte in Form eines weiteren Steckers 52 (vgl. Figur 4) vorgesehen, die eine elektrisch leitende Verbindung mit dem am Grundkörper 21 bzw. der unteren Schale 34 festgelegten Stecker 51 eingehen, sobald die Anzeigeeinrichtung 30 am Grundkörper 21 festgelegt ist bzw. mit der unteren Schale 34 verbunden ist. Das besagte Anschlusselement 51 kann auch an einem flexiblen, freibeweglichen Kabel 53 im Bereich der Anzeigeeinrichtung 30 vorgesehen sein. In diesem Fall erfolgt die elektronische Verbindung mit dem anzeigeeinrichtungseitigen weiteren Stecker 52 (Kontakte) vorzugsweise manuell vor dem Verbinden der beiden Schalen 31, 34 der Anzeigeeinrichtung 30. In der gleichen Weise kann mit einer elektronischen Einrichtung verfahren werden, die im Bereich des Nabenkörpers 94 lösbar festgelegt werden soll.

Gemäß Figur 8 verläuft die elektrische Leitung 53 von dem besagten nicht umhüllten Abschnitt 93 des Grundkörpers 21 entlang des Lenkradkranzes 20 über eine Speiche 95 zum Nabenkörper 94.

Die Figuren 9 bis 15 zeigen anhand schematischer Schnittdarstellungen die Leitungsführung entlang des Lenkradkranzes 20.

Gemäß den Figuren 9 bis 11 ist hierzu eine entlang der Erstreckungsrichtung R verlaufende Nut 54 (Aussparung) des Grundkörpers 21 (Skelett) vorgesehen, in der die besagte elektrische Leitung 53 angeordnet wird, und zwar bevor der Grundkörper 21 mit der Grundkörperumhüllung 22 versehen wird (vorzugsweise durch Anschäumen der Umhüllung), die die elektrische Leitung 53 in der Nut 54 einschließt. Die Nut 54 kann dabei so ausgeformt sein, dass die elektrische Leitung 53 gemäß Figur 9 beim Anordnen in der Nut 54 verformt wird und daher in der Nut 54 gehalten wird, d.h., in der Nut 54 festge klemmt wird.

Alternativ hierzu kann die Leitung 53 vorstehende Bereiche 55 (Strukturen) der Nut 54 hintergreifen, so dass sie nicht aus der Nut 54 herausrutschen kann (Figur 10). Schließlich kann die elektrische Leitung 53 vermittels eines zusätzlichen, separaten Befestigungsmittels, wie beispielsweise einem Klebeband 96, in der Nut 54 gehalten werden, das hierzu so am Grundkörper 21 angeordnet wird, dass es die Nut 54 abschnittsweise überdeckt (Figur 11).

Des Weiteren kann gemäß Figur 11a, die eine Abwandlung der in der Figur 11 gezeigten Ausführungsform zeigt, auf eine Nut 54 verzichtet werden. Hierbei verläuft die elektrische Leitung 53 (zumindest abschnittsweise) entlang einer nach außengewandten Oberfläche des Grundkörpers 21, z.B. an einer dem Fahrer zugewandten Seite 21 a des Grundkörpers 21, d.h., entlang eines außenliegenden Randbereiches des Grundkörpers 21. Die elektrische Leitung 53 wird mittels eines separaten Befestigungsmittels in dieser Position gehalten, wobei es sich bei diesem Befestigungsmittel vorzugsweise um ein Klebeband 96 gemäß Figur 11 handelt, dass die Leitung 53 abschnittsweise überdeckt und dabei an jener Seite 21 a festlegt.

Gemäß den Figuren 12 bis 15 besteht alternativ die Möglichkeit, die elektrische Leitung 53 nach dem Aufbringen der Grundkörperumhüllung 22 auf der Grundkörperumhüllung zu veriegen.

Hierzu kann gemäß Figur 12 bis 15 eine Nut 56 (Aussparung) zur Aufnahme der elektrischen Leitung 53 in die Grundkörperumhüllung 22 eingebracht werden, insbesondere mittels einer entsprechend geformten Schäumform. Die Leitung 53 kann dann in die Nut 56 hinein gedrückt und durch die weitere Umhüllung 25 überdeckt werden, wobei eine Nahtverbindung 97 zwischen aneinanderstoßenden, entlang der Erstreckungsrichtung R verlaufenden Stirnseiten einer solchen weiteren Umhüllung 25 abseits der Leitung 53 verläuft (Figur 12).

Für den Fall, dass die elektrische Leitung 53 unterhalb einer derartigen Nahtverbindung 97 verlaufen sollte, kann die Nut 56 mit einem Schaumstreifen verschlossen werden, so dass die elektrische Leitung 53 in der Nut 56 im Querschnitt eingeschlossen wird (Figur 13).

Gemäß den Figuren 14 und 15 kann die elektrische Leitung 53 des Weiteren mittels eines Klemmstreifens 57 (Verschlusselement) in der Nut 56 der Grundkörperumhüllung 22 fixiert werden. Der Klemmstreifen 57 kann dabei die elektrische Leitung 53 zusammendrücken und mit der Nut 56 verklemmen (Figur 15) oder die Leitung 53 umgreifen und dabei einen Hinterschnitt der Nut 56 hintergreifen, so dass der Klemmstreifen 57 samt elektrischer Leitung 53 in der besagten Nut 56 gehalten wird.

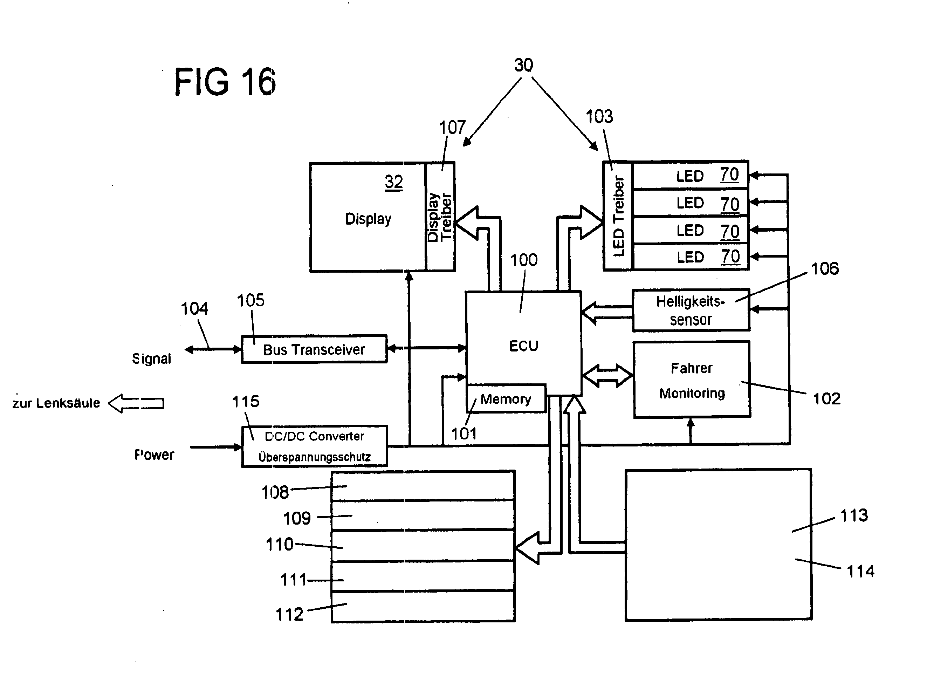

Figur 16 zeigt anhand eines Blockdiagramms die einzelnen Komponenten der Anzeigeinrichtung 30 und deren Steuereinheit 100 (ECU), die zur Ansteuerung der Anzeigeeinrichtung 30 und weiterer im Kraftfahrzeug bzw. Lenkrad 2 anordenbarer Fahrzeugkomponenten dient.

Die Steuereinheit 100 steuert insbesondere die Anzeige 32 (Display) und die in den Reflektormitteln 71 angeordneten LEDs 70 der Anzeigeeinrichtung 30. Die mittels der Anzeigeinrichtung 30 darzustellenden Bilder sowie Steueralgorithmen werden in einem separaten Speicher 101 innerhalb oder außerhalb der Steuereinheit 100 abgelegt oder über einen Fahrzeugbus oder Fahrzeugsensoren an die Steuereinheit 100 übertragen. Ein zusätzliches Fahrermonitoringgerät 102 (z.B. in Form einer Kamera) wird ebenfalls über die Steuereinheit 100 angesteuert.

Weitere im Lenkrad 2 untergebrachte Geräte wie z.B. eine Lenkradheizung, ein Lenkwinkelsensor, die Beleuchtung, Schalter, Aktuatoren z.B. für eine Aktivlenkung etc., können ebenfalls durch die Steuereinheit 100 gesteuert werden.

Der die Anzeigeeinrichtung 30 und die Steuereinheit 100 tragende Schaltungsträger 35 kann aus Gründen der Bauteilaufteilung oder aus Temperaturgründen in zwei oder mehrerer einzelne Schaltungsträger aufgeteilt werden. So können beispielsweise wärmeerzeugende Teile (LED-Treiber 103, LEDs 70 etc.) wegen einer besseren Temperaturableitung über Wärmeableitbänder mit dem Grundkörper 21 des Lenkradkranzes 20 verbunden werden. Hierdurch kann Wärme von den wärmeempfindlichen Bauteilen (z.B. OLED 32) abgeleitet bzw. ferngehalten werden.

Andere wärmeerzeugende Bauteile können auch auf separaten Schaltungsträgern (Platinen) im Bereich einer Speiche 95 des Lenkrades 2 angeordnet werden (z.B. aus Mangel an Bauraum oder wegen deren wärmeerzeugender Eigenschaft.

Grundsätzlich ist die Steuereinheit 100 derart ausgelegt, dass das Lenkrad 2 zusammen mit Sensoren, der Steuereinheit 100 und sonstigen Aktuatoren und Fahrzeugkomponenten eine autonome Einheit bildet. Dabei erfolgt jegliche Verarbeitung von Signalen unsichtbar innerhalb des Lenkrades 2. Insbesondere ist die Steuereinheit 100 im Lenkrad 2 angeordnet und zwar vorzugsweise im Lenkradkranz 20, insbesondere in der Anzeigeeinrichtung 30.

Hierdurch kann das komplette Lenkrad 2 in jedes Fahrzeug eingebaut werden, wobei die Integration in das betreffende Fahrzeug unkompliziert ist und insbesondere keine Veränderung oder Anpassung der Fahrzeugarchitektur erfordert. Zusätzliche Fahrzeuginformationen können einfach vom bestehenden Fahrzeugbus gelesen werden. Hierdurch können Diagnosen und sonstige Datensicherheitskontrollmechanismen direkt durch das Lenkrad 2 vorgenommen werden. Insbesondere können Speziallenkräder als optionale Ausrüstung für bestimmte Fahrzeuglinien angeboten werden.

Die Anzeigeeinrichtung 30 weist gemäß Figur 16 im Detail den folgenden Aufbau auf:

Zum Steuern von Komponenten der Anzeigeeinrichtung dient die zentrale Steuereinheit 100 (ECU), die einen Speicher 101 zum Ablegen von Informationen aufweisen kann. Die zentrale Steuereinheit 100 kann dabei über einen mit der Steuereinheit 100 verbundenen Signalbus 104, und zwar mittels einer Bus-Sendeempfangseinheit 105 (Bus Transceiver) mit einem tahrzeugseitigen Bus Signale austauschen. Wenn im tolgenden von Verbindungen die Rede ist, so sind Verbindungen zwischen elektronischen Bauteilen gemeint, über die Signale übermittelt oder ausgetauscht werden können. Vorzugsweise verläuft der besagte Signalbus 104 über die Lenksäule zu einem fahrzeugseitigen Bussystem.

Weiterhin ist die Steuereinheit 100 mit einem Helligkeitssensor 106 verbunden, so dass die Steuereinheit 100 weitere mit der Steuereinheit 100 verbundene Komponenten in Abhängigkeit von der im Fahrzeug herrschenden Helligkeit regeln kann. Bei einer solchen Komponente handelt es sich insbesondere um die Anzeige 32 der Anzeigeeinrichtung 30 sowie die in den Reflektormitteln 71 angeordneten LEDs 70 der Anzeigeeinrichtung 30, deren Helligkeit, Farbe und Kontrast auf diese Weise in Abhängigkeit von der im Fahrzeug herrschenden Helligkeit regelbar sind. Hierzu ist die Anzeige 32 über einen Anzeigetreiber 107 und die LEDs 70 über einen LED-Treiber 103 mit der Steuereinheit 100 verbunden.

Des Weiteren ist die Steuereinheit 100 mit einem Fahrermonitoringgerät 102, z.B. in Form einer Kamera, verbunden. Die Steuereinheit 100 ist dabei dazu eingerichtet und vorgesehen, mittels einer geeigneten Auswertesoftware einen Aufmerksamkeitszustand des Fahrers zu ermitteln und weitere Komponenten in Abhängigkeit von jenem Aufmerksamkeitszustand anzusteuern. So kann zum Beispiel mittels der Anzeige 32 eine optische Warnung an den Fahrer ausgegeben werden, wenn die Steuereinheit 100 in Zusammenwirkung mit dem Fahrermonitoringgerät 102 feststellt, dass der Fahrer müde ist oder dem Straßenverkehr nicht aufmerksam folgt.

Solche Warnungen können auch haptisch (fühlbar) oder akustisch (hörbar) über ein entsprechendes Ausgabegerät (Aktuator) abgegeben werden, wobei solche Ausgabegeräte (Aktuatoren) wie die Anzeigeeinrichtung 30 ebenfalls im Lenkrad 2 angeordnet sein können.

Die vorstehend beschriebenen Teile sind vorzugsweise auf dem besagten Schaltungsträger 35 angeordnet, der seinerseits, wie vorstehend beschrieben, (als Teil der Anzeigeeinrichtung 30) im Lenkradkranz 20 angeordnet ist und in mehrere Schaitungsträger (Platinen) aufgespaltet sein kann. Statt bzw. zusätzlich zur Anzeigeeinrichtung 30 kann die Steuereinheit 100 auch andere, vorzugsweise im Lenkrad 2 angeordnete Fahrzeugkomponenten, wie z.B. eine Lenkradheizung 108, eine Beleuchtung 109, Schalter 110, einen Aktuator 111 für eine Aktivlenkung 112 (ggf. einschließlich einer Steuerelektronik des Aktuators) ansteuern. Die besagten anderen Fahrzeugkomponenten sind vorzugsweise nicht auf dem Schaltungsträger 35 der Anzeigeeinrichtung 30 vorgesehen.

Schließlich kann die Steuereinheit 100 auch von weiteren Sensoren Signale empfangen und verarbeiten. Diese Sensoren können ebenfalls im Lenkrad 2 angeordnet sein. Vorzugsweise handelt es sich bei diesen Sensoren um einen Lenkwinkelsensor 113, mit dem ein Lenkwinkel (Lenkradeinschlag) des Lenkrades 2 erfassbar ist und einen Lenkwinkelbeschleunigungssensor 114, mit dem erfassbar ist, wie schnell sich ein Lenkwinkel des Lenkrades 2 ändert. Vorzugsweise sind jene weiteren Sensoren nicht auf dem besagten Schaltungsträger 35 angeordnet.

Zur Spannungsversorgung sind die Steuereinheit 100, die Anzeige 32, die LEDs 70, der Helligkeitssensor 106, das Fahrermonitoringgerät 102 über ein Netzteil 115 (ggf. mit Überspannungsschutz) mit einer fahrzeugseitigen Energiequelle verbunden.

Figur 17 zeigt im Zusammenhang mit den Figuren 18 bis 21 die Reflektormittel 71 der Anzeigeeinrichtung 30 mit den darin angeordneten LEDs 70. Die Hauptaufgabe des Reflektors 71 besteht in der seitlichen Abgrenzung des Lichtes der LEDs 70, so dass sich Leuchtstreifen 72 ergeben, d.h., die beiden Reflektormittel 71 sind dazu ausgebildet, den Strahlengang der LEDs 70 so zu beeinflussen, dass in der Ebene der Scheibenabdeckung 90 für den Fahrer homogen beleuchtete Streifen 72 sichtbar sind, die sich vorzugsweise entlang der ersten Richtung R erstrecken.

Gemäß der Figur 17 nimmt die Länge der besagten Streifen 72 entlang der Erstreckungsrichtung R zu einem äußeren Umfang 98 des Lenkradkranzes 20 hin zu. Zum Erzeugen der Leuchtstreifen 72 weisen die Reflektormittel 71 jeweils entlang der Erstreckungsrichtung R erstreckte Ausnehmungen 99 auf, in denen die LEDs 70 äquidistant entlang der Erstreckungsrichtung R angeordnet sind.

Die Figur 18 zeigt jene Ausnehmungen 99 in einer Schnittansicht entlang der Linie A-A der Figur 17. Danach weisen die Ausnehmungen 99 jeweils einen entlang der Erstreckungsrichtung R erstreckten Boden 99a auf, der einem Fahrer zugewandt ist, sowie je zwei einander quer zur Erstreckungsrichtung R gegenüberliegende Wandungen 99b, 99c (Reflektionswände) an denen die Lichtstrahlen der LEDs in Richtung auf die Scheibenabdeckung 90 reflektiert werden. Die Wandungen 99b, 99c gehen vom Boden 99a ab und laufen dabei definiert auseinander. Jede Ausnehmung 99 weist des Weiteren einen umlaufenden Randbereich 99d auf, der die jeweilige Ausnehmung 99 in einer Ebene begrenzt, die parallel zu der Ebene verläuft (beabstandet um die Dicke der Dichtung 91) entlang der die Anzeigeseite 32a der Anzeige 32 erstreckt ist. Auf diesen Randbereichen 99d kann die besagte Scheibenabdeckung 90 aufliegen (die Scheibenabdeckung 90 überdeckt die Ausnehmungen 99), so dass die besagten Leuchtstreifen 72 für den Fahrer in der Erstreckungsebene jener Scheibenabdeckung 90 entstehen.

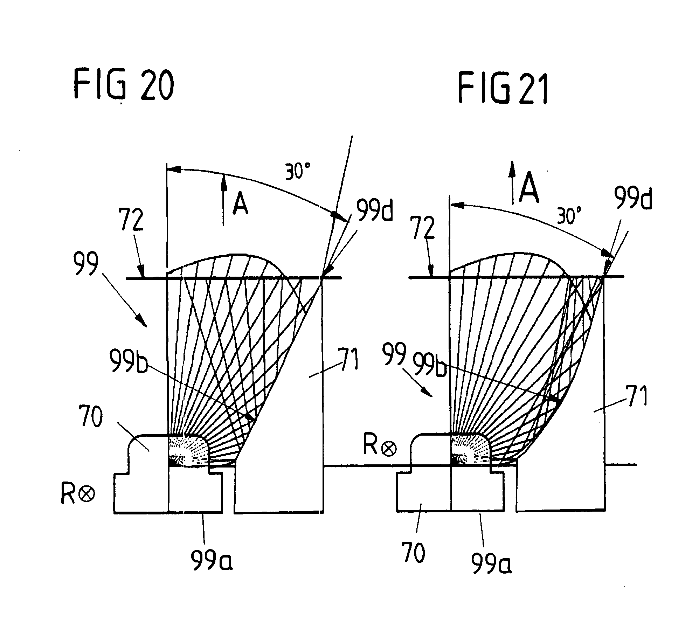

Zwei Möglichkeiten des Auseinanderlaufens der Wandungen 99b, 99c sind in den Figuren 20 und 21 dargestellt. Danach ist eine Querschnittskontur der Wandungen 99a, 99b in einer senkrecht zur Erstreckungsrichtung orientierten Querschnittebene, die in den besagten Figuren gezeigt ist, so gestaltet, dass die Dichte reflektierter Lichtstrahlen am Randbereich 99d besonders hoch ist. Dies führt zu einer homogeneren Ausleuchtung der besagten Leuchtstreifen 72 bzw. eines entsprechenden Bereiches 72 der Scheibenabdeckung 90. Durch Verwendung mehrfarbiger LEDs 70 oder durch ein abwechselndes Anordnen verschiedenfarbiger LEDs, beispielsweise von roten und grünen LEDs 70 entlang des Bodens 99a der besagten Ausnehmungen 99 kann ein roter oder ein grüner Leuchtstreifen 72 zu unterschiedlichen Zeiten an derselben Position, d.h., in demselben Bereich 72 der Scheibenabdeckung 90 erscheinen.

Die Reflektormittel 71 können natürlich hinsichtlich der gleichmäßigen Ausleuchtung der Leuchtstreifen 72 optimiert werden. Vorzugsweise ist die Form der Reflektormittel 71, insbesondere die Form der Ausnehmungen 99, für jeden LED-Typ anzupassen, da unterschiedliche LED-Typen eine unterschiedliche Abstrahlcharakteristik aufweisen.

Durch die Ausrichtung des Lichtes nach oben (in Blickrichtung des Fahrers), d.h., parallel zur Aufbaurichtung A, erscheint der Leuchtstreifen 72 heller.

Durch Verwendung mehrfarbiger LEDs 70 oder durch ein abwechselndes Anordnen von roten und grünen LEDs 70 entlang des Bodens 99a der besagten Ausnehmungen 99 kann ein roter oder ein grüner Leuchtstreifen 72 zu unterschiedlichen Zeiten an derselben Position, d.h., in demselben Bereich 72 der Scheibenabdeckung 90 erscheinen.

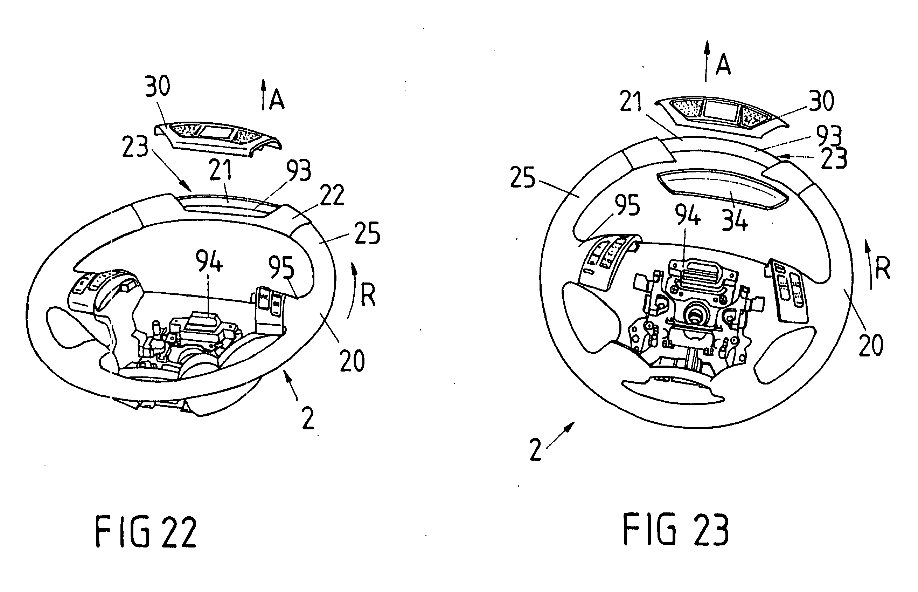

Die Figuren 22 bis 24 zeigen unterschiedliche Konzepte zur mechanischen Verbindung der Anzeigeeinrichtung 30 mit dem Lenkradkranz 20 in perspektivischen Explosionsansichten.

Gemäß Figur 22 ist die Grundkörperumhüllung 22 entlang der Erstreckungsrichtung R des Lenkradkranzes 20 so ausgebildet, dass ein Abschnitt einer der unteren Abdeckung 92 der Anzeigeeinrichtung 30 entlang der Aufbaurichtung A zugewandten Oberseite 21a des Grundkörpers 21 nicht durch die Grundkörperumhüllung 22 bedeckt ist, während ein entsprechender Abschnitt einer jener Oberseite 21 a abgewandten Unterseite 21 b des Grundkörpers 21 durch die besagte Grundkörperumhüllung 22 bedeckt ist. D.h., die Grundkörperumhüllung 22 weist eine entsprechende Ausnehmung 23 (Aussparung) auf, in die die Anzeigeeinrichtung 30 eingesetzt ist, so dass die dem Fahrer zugewandte Oberfläche 31a der oberen ersten Schale 31 bündig mit einer die Ausnehmung 23 begrenzenden äußeren Oberfläche der Grundkörperumhüllung 22 bzw. einer Belederung 25 der Grundkörperumhüllung 22 abschließt.

Im Unterschied dazu ist der besagte Abschnitt 93 des Grundkörpers 21 gemäß Figur 23 vollkommen frei, d.h., nicht durch die Grundkörperumhüllung 22 bedeckt (umgeben). Um den besagten Abschnitt 93 des Grundkörpers 21 zu verkleiden, ist daher die untere Schale 34 vorgesehen, die den Grundkörper 21 an der dem Fahrer abgewandten Seite des Abschnittes 93 des Grundkörpers 21 bedeckt. Dabei werden die Anzeigeeinrichtung 30 und die untere Schale 34 so am Grundkörper 21 befestigt, d.h., in der besagten Ausnehmung 23 der Grundkörperumhüllung 22 angeordnet, dass sowohl die dem Fahrer zugewandte Oberfläche 31a der oberen ersten Schale 31 als auch die dem Fahrer abgewandte Oberfläche 34b der unteren Schale 34 bündig mit einer die Ausnehmung 23 der Grundkörperumhüllung 22 begrenzenden äußeren Oberfläche der Grundkörperumhüllung 22 bzw. einer Belederung 25 der Grundkörperumhüllung 22 abschließt.

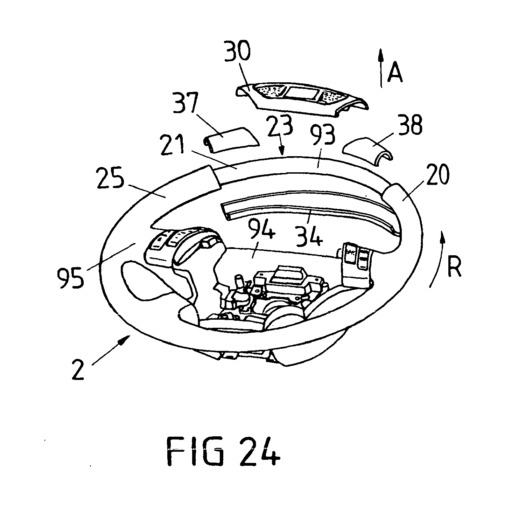

Gemäß Figur 24 ist ergänzend zu der in der Figur 23 gezeigten Anordnung eine obere zweite Schale 37 und eine obere dritte Schale 38 vorgesehen. Diese beiden Schalen 37, 38 werden zu beiden Seiten (entlang der Erstreckungsrichtung R) der oberen ersten Schale 31 angeordnet und dienen als Toleranzausgleich. Die untere Schale 34 weist dabei nunmehr entlang des Grundkörpers 21 eine Länge auf, die der Summe der Längen der oberen drei Schalen 31, 37, 38 entspricht (bis auf Toleranzen). Somit umgreifen die erste, zweite und dritte obere Schale 31, 37, 38 den Grundkörper 21 auf einer dem Fahrer zugewandten Seite 21 a und die untere Schale 34 auf einer dem Fahrer abgewandten Seite 21 b des Grundkörpers 21. Dabei sind die Schalen 31, 37, 38 und 34 so am Grundkörper 21 festgelegt, dass Sie in ihrer Gesamtheit den besagten Abschnitt 93 des Grundkörpers 21 im Querschnitt einschließen (ggf. bis auf Abstände zwischen gegenüberliegenden Stirnseiten der Schalen 31, 37, 38).

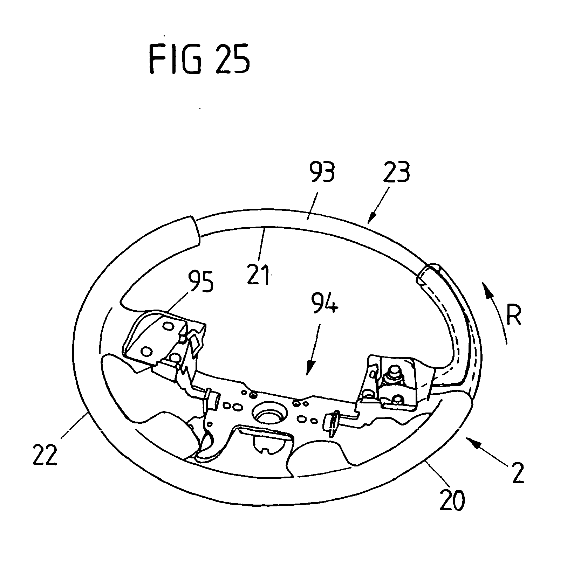

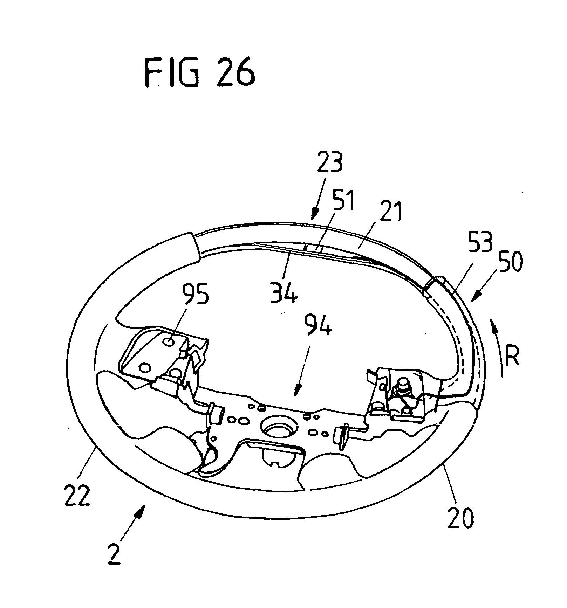

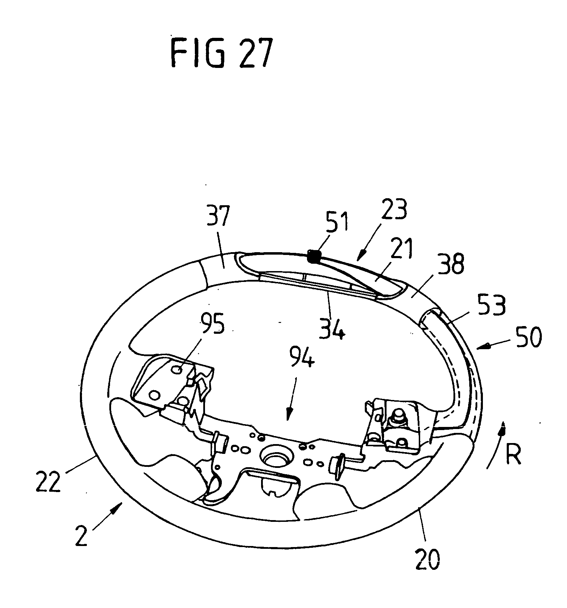

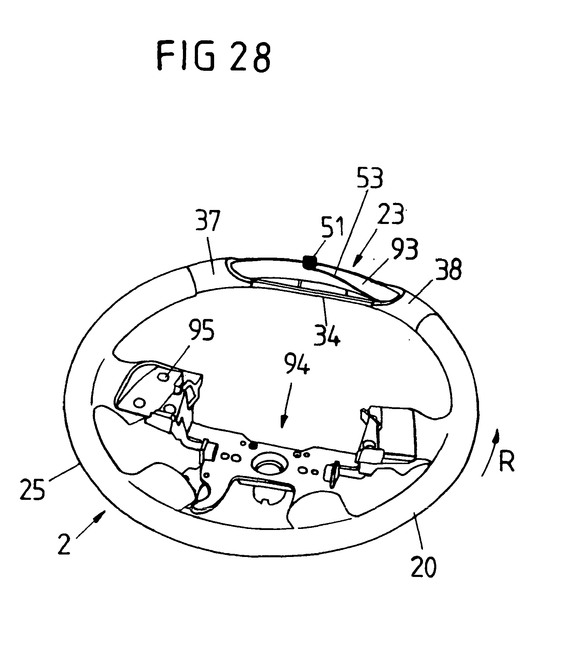

Die Figuren 25 bis 30 zeigen eine Möglichkeit zur Herstellung einer erfindungsgemäßen Lenkradbaugruppe 1 anhand des in der Figur 24 gezeigten 4-Schalen Konzeptes.

In einem ersten Schritt gemäß Figur 25 wird auf einen Grundkörper 21 eines Lenkradkranzes 20, der auch einen Grundkörper für einen Nabenkörper 94 des Lenkrades 2 und Speichen 95 des Lenkrades 2 bereitstellt, die den Nabenkörper 94 mit dem Lenkradkranz 20 verbinden, eine Grundkörperumhüllung 22 aufgebracht und zwar durch Umschäumen des Grundkörpers 21 in einer geeigneten Schäumform. Hierbei erhält die Grundkörperumhüllung 22 eine Nut 56 (Schlitz) zur Aufnahme der elektrischen Leitung 53 (der Schaum auf der rechten Seite der Figur 25 ist zur Verdeutlichung durchsichtig dargestellt).

Die Grundkörperumhüllung 22 wird so ausgebildet, dass in 12-Uhr-Position eine Ausnehmung 23 der Grundkörperumhüllung 22 geschaffen wird, derart, dass der besagte Abschnitt 93 des Grundkörpers 21 frei liegt.

In jene Ausnehmung 23 wird auf der dem Fahrer abgewandten Seite 21 b des Grundkörpers 21 die untere Schale 34 (erstes Bauteil) in die Ausnehmung 23 eingesetzt. Dies erfolgt zusammen mit dem Einfügen der elektrischen Leitung 53 und des Steckers 51.

Sodann werden die obere zweite Schale 37 und die obere dritte Schale 38 (so genannte "Splits" oder seitliche Schalen bzw. zweites und drittes Bauteil) auf einer dem Fahrer zugewandten Seite des besagten Abschnittes 93 des Grundkörpers 21 in die Ausnehmung 23 eingesetzt und mit der unteren Schale 34 und/oder dem Grundkörper 21 verbunden.

Anschließend erfolgt eine Belederung (weitere Umhüllung 25) der Grundkörperumhüllung 22 des Lenkrades 2, die vorzugsweise die untere Schale 34 und/oder die obere zweite und dritte Schale 37, 38 bedeckt.

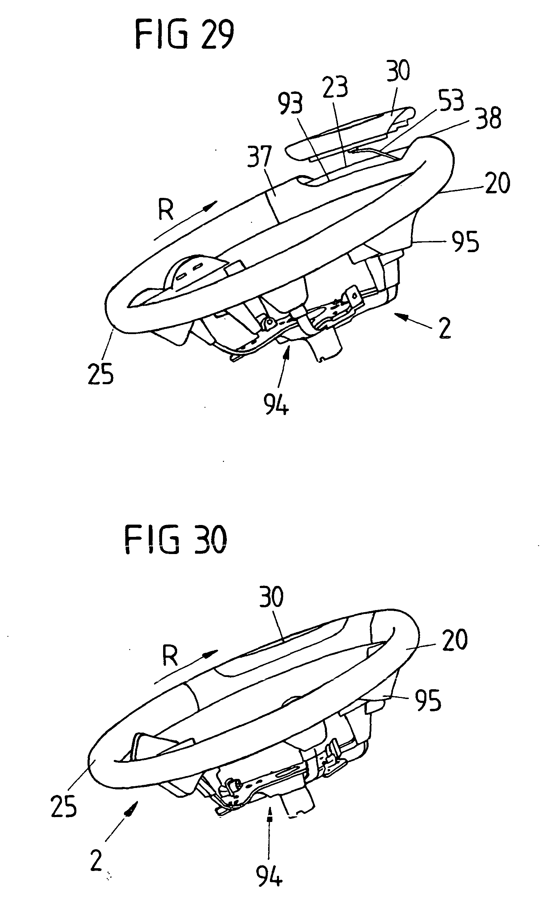

Schließlich wird die Anzeigeeinrichtung 30 über den besagten Stecker 51 mit der elektrischen Leitung 53 verbunden und in die Ausnehmung 23 der Grundkörperumhüllung gemäß der Figuren 29 und 30 eingesetzt. Die Anzeigeeinrichtung 30 kann dabei in die Ausnehmung 23 eingeklebt werden oder gemäß den Figuren 2 bis 6 am Grundkörper 21 festgelegt werden.

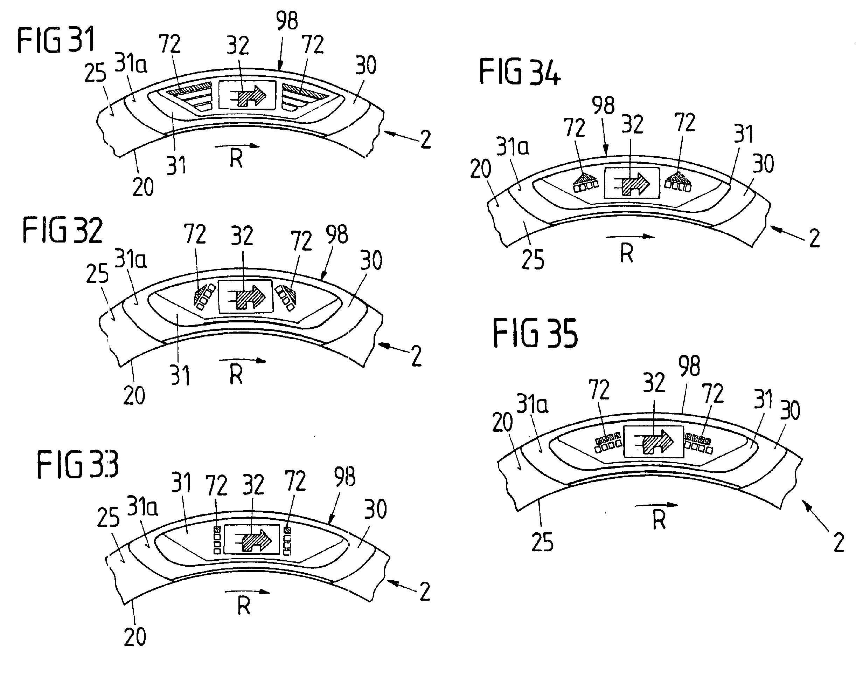

Die Figuren 31 bis 36 zeigen jeweils in einer ausschnitthaften Draufsicht eine erfindungsgemäße Anzeigeeinrichtung 30 mit unterschiedlich gestalteten Anzeigen 32 und Leuchtstreifen 72 (LED-Anordnungen).

Gemäß Figur 31 erstrecken sich die Leuchtstreifen 72 entlang der Erstreckungsrichtung R beidseitig der Anzeige 32 entlang der Erstreckungsrichtung R, wobei die Länge der Leuchtstreifen 72 zum äußeren Umfang 98 des Lenkradkranzes 20 hin zunimmt. Bezüglich der Anzeige 32, die - wie bereits beschrieben - am Lenkradkranz 20 in der 12-Uhr-Position angeordnet ist, sind die Leuchtstreifen 72 spiegelsymmetrisch angeordnet. Diese spiegelsymmetrische Anordnung ist auch bei den Figuren 32 bis 42 vorhanden.

Gemäß Figur 32 verlaufen die Leuchtstreifen 72 geneigt zur Erstreckungsrichtung R, so dass sie benachbart zum äußeren Umfang 98 des Lenkradkranzes 20 eine geringere Beabstandung zur Anzeige 32 aufweisen (entlang der Erstreckungsrichtung).

Gemäß Figur 33 verlaufen die Leuchtstreifen 72 im Unterschied zur Figur 31 quer zur Erstreckungsrichtung R parallel zu den seitlichen Begrenzungen der Anzeige 32.

Gemäß Figur 34 sind die Leuchtstreifen 72 entlang der Erstreckungsrichtung R längs erstreckt, wobei die dem äußeren Umfang 98 des Lenkradkranzes 20 am nächsten gelegenen Leuchtstreifen 72 beidseitig der Anzeige 32 eine Dreiecksform mit je einer zum äußeren Umfang 98 weisenden Spitze aufweisen.

Gemäß Figur 35 sind gleich lange, entlang der Erstreckungsrichtung R längs erstreckte Leuchtstreifen 72 vorgesehen.

Bei den Figuren 31 bis 35 sind diejenigen Leuchtstreifen 72, die zum äußeren Umfang 98 des Lenkradkranzes 20 jeweils die geringste Beabstandung aufweisen, also entlang der vertikalen Fahrzeugachse (bezogen auf eine Geradeausfahrtstellung des Lenkradeskranzes) oberhalb der anderen Leuchtstreifen 72 liegen, vorzugsweise rot beleuchtet. Die darunter liegenden Leuchtstreifen 72 sind vorzugsweise grün beleuchtet.

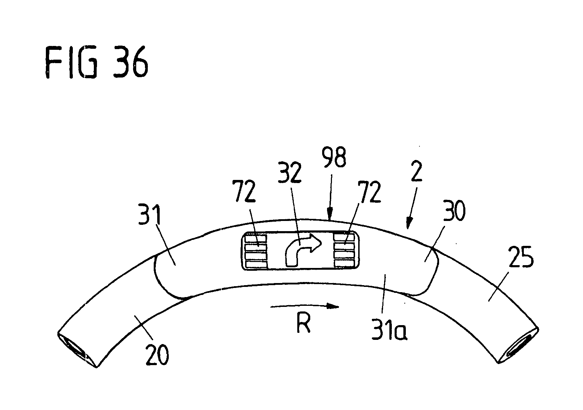

Die Anordnung gemäß Figur 36 zeigt eine Anzeigeeinrichtung 30, bei der im Unterschied zu den vorhergehenden Ausführungen die Leuchtstreifen 72 integraler Bestandteil der Anzeige 32 sind.

Die in den Figuren 31 bis 35 gezeigten Leuchtstreifen 72 werden vorzugsweise jeweils durch eine Mehrzahl von LEDs 70 erzeugt. Durch Verwendung mehrfarbiger LEDs 70 oder durch ein abwechselndes Aufbringen von roten und grünen LEDs 70 kann ein roter oder ein grüner Leuchtstreifen 72 zu unterschiedlichen Zeiten an derselben Position erscheinen. Die Leuchtstreifen 72 können beispielsweise dazu dienen, einen Abstand zu einem Objekt (z.B. ein vorausfahrendes Fahrzeug) zu signalisieren.

Die Art der jeweils vorgesehenen LEDs 70 ist je nach Variante unterschiedlich. So können z.B. Mehrfarb-LEDs 70 oder Einfarb-LEDs 70 unterschiedlicher Farbe, die abwechselnd angeordnet sind, verwendet werden.

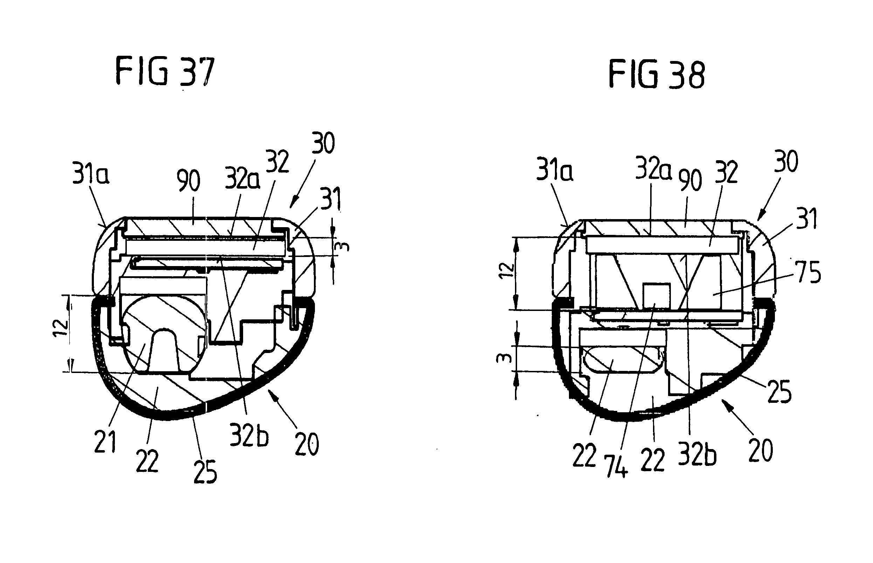

Die Figuren 37 und 38 zeigen jeweils eine Schnittansicht eines Lenkradkranzes 20 einer erfindungsgemäßen Lenkradbaugruppe 1, und zwar einen Schnitt durch die Anzeige 32 der Anzeigeeinrichtung 30.

Im Hinblick auf die Anzeige von Informationen ist eine sehr helle Anzeige 32 (Display) für gute Sichtbarkeit bei Sonnenlicht von Vorteil. Anzeigen 32 in Form von TFT- oder LCD-Displays benötigen eine Hintergrundbeleuchtung, um eine gewisse Helligkeit zu erreichen. Diese Hintergrundbeleuchtung muss zur homogenen Ausleuchtung einen bestimmten Abstand zur Anzeige 32 aufweisen. Sie benötigt somit zusätzlichen Platz entlang der Aufbaurichtung A, der von dem Grundkörper 21 (Skelett) abgezogen werden muss, so dass die Anzeige 32 nicht all zu weit über den Lenkradkranzdurchmesser hinaus steht. Der Grundkörperquerschnitt wird also schmaler.

Eine andere Möglichkeit betrifft die Nutzung transflexiver Anzeigen 32. Diese nutzen zusätzlich das einfallende Licht zu ihrer Beleuchtung. Das Sonnenlicht scheint durch die Anzeige 32, wird auf einer Rückseite 32b der Anzeige 32 reflektiert und trägt dann mit zur Ausleuchtung der Anzeige 32 bei.

Bei Verwendung transparenter Materialien für den Schaum 22 und die untere Schale 34 kann das Sonnenlicht auch von hinten (in Fahrzeugrichtung von vorne) auf die Anzeige 32 treffen und zu deren Ausleuchtung beitragen. Dazu sind vorzugsweise sehr schmale Grundkörper 21 (Skelette) oder Grundkörper 21 mit Lücken für den Lichtdurchtritt vorgesehen. Alternativ kann das Licht auch mittels Lichtleitstreifen von der Rückseite des Lenkradkranzes 20 um den Grundkörper 21 herum auf die Rückseite 32b der Anzeige 32 geleitet werden.

Nach der Figur 37 ist die Anzeige 32 als eine selbstleuchtende Anzeige 32 (Display), z.B. in Form eines OLED ausgebildet. Diese kann über die elastischen Dämpfungsmittel 36 mit dem Schaltungsträger 35 verbunden sein (vgl. Figur 6).

Alternativ hierzu ist gemäß Figur 38 anstelle der selbstleuchtenden Anzeige 32 entlang der Aufbaurichtung A zwischen der Anzeige 32 und dem Schaltungsträger 35 eine ggf. auf dem Schaltungsträger 35 festgelegte Hintergrundbeleuchtung in Form zumindest einer LED 74 vorgesehen, die in einem Reflektormittel 75 angeordnet ist. Dieses kann im Querschnitt wie in den Figuren 20 oder 21 gezeigt ausgestaltet sein, da auch hier eine möglichst homogene Hintergrundbeleuchtung wünschenswert ist.

Die Hintergrundbeleuchtung kann auch in Form einer EL-Folie (Elektrolumineszenz-Folie) ausgebildet sein. Bei einer solchen Folie sind zwischen zwei flächigen, entlang der Folienebene erstreckten Elektroden in einem flächigen Volumen Leuchtpigmente angeordnet. Diese Pigmente werden durch das elektrische Feld zwischen den Elektroden zum Leuchten angeregt.

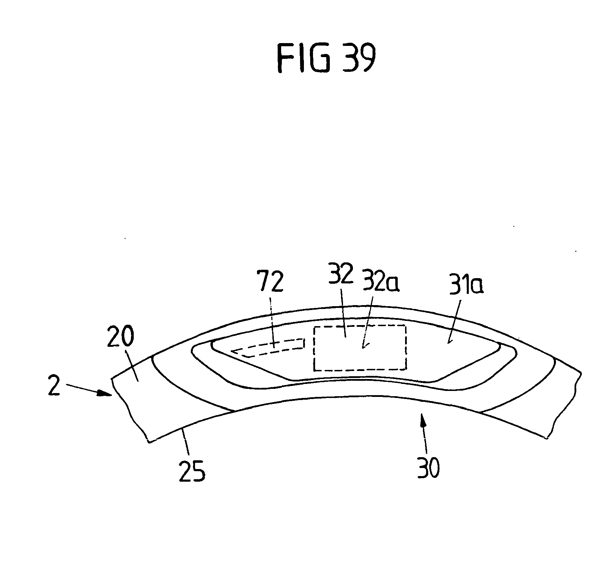

Gemäß Figur 39 kann die obere erste Schale 31 so hergestellt werden, dass sie eine homogen anmutende, äußere (sichtbare) Oberfläche 31 a bereitstellt, wobei die Anzeige 32 und die LEDs 70 nur dann für einen Fahrer (Betrachter) sichtbar sind, wenn optische Informationen mittels dieser Komponenten dargestellt werden. Die Oberfläche 31a bildet also eine Fläche, auf der lediglich die optischen Informationen erscheinen. Die anzeigenden Mittel sind hingegen nicht sichtbar (Bilddurchlässigkeit). Bei solchen Oberflächen 31a handelt es sich um so genannte transluzente (lichtdurchlässige bzw. lichtteildurchlässige) Oberflächen, die durch eine geeignete Beschichtung einer Oberfläche erzeugbar sind. Im Gegensatz zu transparenten (blick- und bilddurchlässigen) Oberflächen, sind diese jedoch nicht blickdurchlässig. Insbesondere handelt es sich bei solchen transluzenten Beschichtungen um teillichtdurchlässige Metallbeschichtungen, die vorzugsweise auf einen Kunststoffträger (obere erste Schale) aufgebracht werden. Es können auch andere Materialien auf diese Weise beschichtet werden.

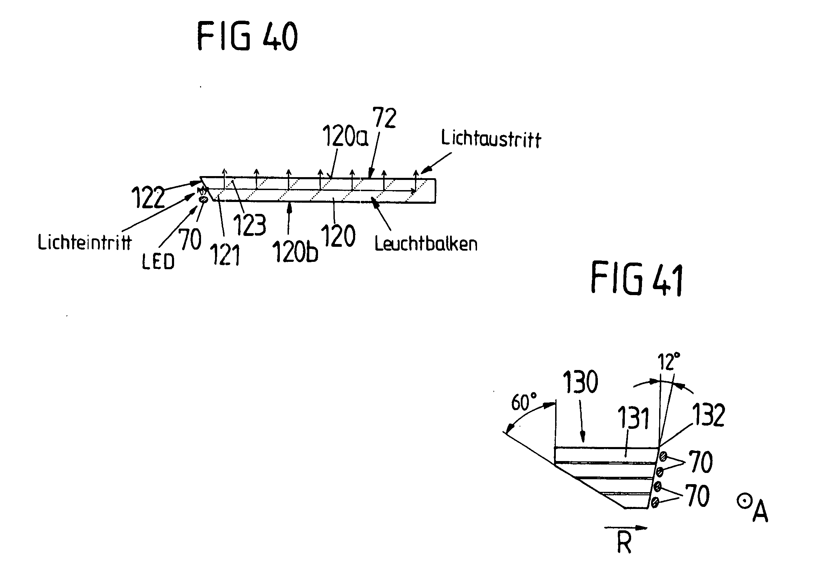

Gemäß Figur 40 können statt der in den Figuren 17 bis 21 gezeigten Reflektormittel 71 auch Leuchtbalken in Form von Prismenstäben 120 verwendet werden. Bei einer Anordnung nach Art der Figuren 17 bis 21 erstreckt sich ein solcher Prismenstab 120 zur Darsieiiung eines Leuchtbalkens 72 (Leuchtstreifens) entlang der Erstreckungsrichtung R (anstelle der Ausnehmungen 99 bzw. Reflektormittel 71). Der Prismenstab 120 weist ein erstes freies Ende 121 mit einer Stirnseite 122 auf, die mit einer einem Fahrer zugewandten (sichtbaren) Oberseite 120a des Prismenstabes 120 einen spitzen Winkel und mit einer der Oberseite 120a gegenüberliegenden Unterseite 120b des Prismenstabes 120 einen stumpfen Winkel einschließt. Die Stirnseite 122 bildet eine Eintrittsfläche, durch die Lichtstrahlen, die durch eine an der Stirnseite 122 angeordnete LED 70 emittiert werden, in den Prismenstab 120 gelangen können. Der Prismenstab 120 weist des weiteren entlang der Erstreckungsrichtung R eine Mehrzahl paralleler Grenzflächen 123 auf, an denen jeweils das in den Prismenstab 120 über die Eintrittsfläche 122 gelangte Licht in Richtung auf die Oberseite 120a des Prismenstabes 120 teilreflektiert wird, so dass es durch jene Oberseite 120a aus dem Prismenstab 120 austritt. Hierdurch bildet die Oberseite 120a des Prismenstabes 120 einen homogen beleuchteten Leuchtstreifen 72.

Gemäß Figur 41 können anstelle der Reflektormittel 71 auch so genannte LED-Lichtleiter 130 ("Lightguides") verwendet werden. Hierbei wird ein Leuchtstreifen 72 durch einen entsprechenden Streifen 131 einer solchen lichtleitenden Folie 130 gebildet, wobei an einem freien Ende 132 eines solchen Streifens 131 je eine LED 70 in die besagte Folie 130 integriert ist (die LEDs sind aus Gründen der Darstellung in der Figur 41 schematisch außerhalb der besagten Streifen 131 gezeigt). Es kann natürlich eine Mehrzahl solcher Folienstreifen 131 lediglich durch eine einzige eingearbeitete LED 70 beleuchtet werden. Gemäß Figur 41 sind vier solche entlang der Erstreckungsrichtung R erstreckte Folienstreifen 131 vorgesehen, mit je einer an einem freien Ende 132 eines Folienstreifens 131 vorgesehen LED 70.

In dem vorstehenden Text wurden die folgenden Abkürzungen verwendet ABS (Acrylnitril - Butadien - Styrol), OLED ("Organic Light Emitting Diode", also organische Licht aussendende Diode), PC (Polycarbonat) PMMA (Polymethylmethacrylat), PU (Polyurethane) TFT ("Thin Film Transistor", also dünner Filmtransistor).

## Patentansprüche

1. Lenkradbaugruppe für ein Kraftfahrzeug, mit
- einem Lenkrad (2) zum Lenken des Kraftfahrzeuges, wobei das Lenkrad (2) einen entlang einer Erstreckungsrichtung (R) umlaufenden Lenkradkranz (20) aufweist, über den es betätigt werden kann,
- einem Nabenkörper (94) des Lenkrades (2), der über zumindest eine Speiche (95) des Lenkrades (2) mit dem Lenkradkranz (20) verbunden ist,
- einer am Lenkradkranz (20) angeordneten Anzeigeeinrichtung (30) zum Anzeigen von Fahrinformationen, die mindestens eine Anzeige (32) zur Erzeugung optischer Signale aufweist, wobei
- die Anzeigeeinrichtung (30) über Befestigungsmittel an dem Lenkradkranz (20) befestigt ist,
- wobei der Lenkradkranz (20) einen Grundkörper (21) aufweist, der zumindest teilweise von einem Material (22) umgeben ist, das insbesondere weicher ist als das Material des Grundkörpers (21), und
- wobei die Anzeigeeinrichtung (30) über die Befestigungsmittel an dem Grundkörper (21) befestigt ist, und
- wobei die Befestigungsmittel zumindest einen am Grundkörper (21) ausgebildeten Befestigungsbereich (41) umfassen,
**dadurch gekennzeichnet, dass** der mindestens eine Befestigungsbereich (41) vom Grundkörper (21) absteht und mindestens eine Durchgangsöffnung (42) aufweist, insbesondere in Form einer Bohrung, zum Herstellen einer form- und/oder kraftschlüssigen Verbindung zwischen der Anzeigeeinrichtung (30) und dem Grundkörper (21), wobei der mindestens eine Befestigungsbereich (41) quer zur Erstreckungsrichtung (R) fortsatzartig in Richtung auf den Nabenkörper (94) absteht.

2. Lenkradbaugruppe nach Anspruch 1, **dadurch gekennzeichnet, dass** die Anzeigeeinrichtung (30) eine obere erste Schale (31) mit einer nach außen weisenden sichtbaren Oberfläche (31 a) aufweist, die - bezogen auf einen Einbauzustand der Lenkradbaugruppe (1) - einem Fahrer zugewandt ist.

3. Lenkradbaugruppe nach Ansprüch2, **dadurch gekennzeichnet, dass** die obere erste Schale (31) einen Ausschnitt (33) oder einen transparenten oder einen transluzenten Bereich (33) aufweist, so dass die besagten optischen Signale sichtbar sind.

4. Lenkradgruppe nach Anspruch 2 oder 3, **dadurch gekennzeichnet, dass** die obere erste Schale (31) mittels eines die Durchgangsöffnung (42) durchgreifenden Stiftes (44) am Grundkörper (21) festgelegt ist, wobei der Stift (44) insbesondere als Schraube ausgebildet ist.

5. Lenkradgruppe nach einem der Ansprüche 2 bis 4, **dadurch gekennzeichnet, dass** eine untere Schale (34) mit einer nach außen weisenden sichtbaren Oberfläche (34a) vorgesehen ist, die der Oberfläche (31 a) der oberen ersten Schale (31) abgewandt ist.

6. Lenkradgruppe nach den Ansprüchen 4 und 5, **dadurch gekennzeichnet, dass** die untere Schale (34) mittels des Stiftes (44) an der oberen ersten Schale (31) festgelegt ist, so dass die beiden Schalen (31, 34) den Grundkörper (21) im Querschnitt umgreifen.

7. Lenkradbaugruppe nach einem der vorhergehenden Ansprüche, **dadurch gekennzeichnet, dass** die Befestigungsmittel zum Verhindern einer Relativbewegung zwischen der Anzeigeeinrichtung (30) und dem Grundkörper (21) eine Clipverbindung (43) zwischen der Anzeigeeinrichtung (30) und dem Grundkörper (21) umfassen und insbesondere, dass die Anzeigeeinrichtung (30) mindestens einen Schaltungsträger (35) aufweist, und dass der Schaltungsträger (35) mittels der Clipverbindung (43) an dem Lenkradkranz (20) festgelegt ist.

8. Lenkradbaugruppe nach einem der vorhergehenden Ansprüche, **dadurch gekennzeichnet, dass** die Anzeigeeinrichtung (30) einen Schaltungsträger (35) sowie Dämpfungsmittel (36) zum Dämpfen mechanischer Schwingungen des Schaltungsträgers (35) aufweist, wobei insbesondere die Dämpfungsmittel (36) einem Gegeneinanderschwingen der Anzeige (32) und des Schaltungsträgers (35) entgegenwirken, und wobei insbesondere die Dämpfungsmittel (36) ein mechanisch dämpfendes Material umfassen, das zwischen der Anzeige (32) und dem Schaltungsträger (35) angeordnet ist.

9. Lenkradbaugruppe nach einem der vorhergehenden Ansprüche, **gekennzeichnet durch** eine obere zweite und eine obere dritte Schale (37, 38) zum Verkleiden des Grundkörpers (21), mit je einer nach außen gewandten Oberfläche (37a, 38a), die - bezogen auf einen Einbauzustand der Lenkradbaugruppe (1) - einem Fahrer zugewandt sind.

10. Lenkradbaugruppe nach Anspruch 9, **dadurch gekennzeichnet, dass** die obere erste Schale (31) entlang einer Erstreckungsrichtung (R) des Lenkradkranzes (20) zwischen der oberen zweiten und der oberen dritten Schale (37, 38) angeordnet ist

11. Lenkradbaugruppe nach Anspruch 5 und nach Anspruch 9 oder 10, **dadurch gekennzeichnet, dass** die obere zweite Schale (37) und die obere dritte Schale (38) je mit der unteren Schale (34) verbunden sind, so dass die obere zweite Schale (37) und die obere dritte Schale (38) jeweils zusammen mit der unteren Schale (34) den Grundkörper (21) im Querschnitt umgreifen.

12. Lenkradbaugruppe nach einem der vorhergehenden Ansprüche, **gekennzeichnet durch**
- mindestens eine elektrische Verbindungseinheit (50) zum elektrischen Verbinden der Anzeigeeinrichtung (30) mit einer Baugruppe des Kraftfahrzeuges; sowie
- mindestens ein Anschlusselement (51), über das die Anzeigeeinrichtung (30) elektrisch an die Verbindungseinheit (50) angeschlossen ist.

13. Lenkradbaugruppe nach einem der vorhergehenden Ansprüche, **gekennzeichnet durch** eine Anzeige (32) der Anzeigeeinrichtung (30) zur Erzeugung eines optischen Signals zur Darstellung von Fahrinformationen auf einer einem Betrachter zugewandten Anzeigeseite (32a) der Anzeige (32), wobei insbesondere der Lenkradkranz (20) so gestaltet ist, dass Umgebungslicht zur Hintergrundbeleuchtung auf eine der Anzeigeseite (32a) abgewandte Seite (32b) der Anzeige (32) gelangen kann, oder dass der Lenkradkranz (20) so gestaltet ist, dass Umgebungslicht zur Hintergrundbeleuchtung von der dem Betrachter zugewandten Anzeigeseite (32a) auf eine der Anzeigeseite (32a) abgewandte Seite (32b) der Anzeige (32) gelangen kann.

14. Lenkradbaugruppe nach einem der vorhergehenden Ansprüche, **dadurch gekennzeichnet, dass** eine Lichtquelle (80) zur Hintergrundbeleuchtung der Anzeige (32) auf einer der Anzeigeseite (32a) abgewandten Seite (32b) der Anzeige (32) vorgesehen ist.

15. Lenkradbaugruppe nach einem der vorhergehenden Ansprüche, **dadurch gekennzeichnet, dass** die Anzeige (32) als selbstleuchtende Anzeige ausgebildet ist, insbesondere in Form eines OLED.

## Claims

1. Steering wheel assembly for a motor vehicle, comprising
- a steering wheel (2) for steering the motor vehicle, wherein the steering wheel (2) comprises a steering wheel rim (20), which circulates along an extension direction (R), by means of which it can be actuated,
- a hub body (94) of the steering wheel (2), which is connected to the steering wheel rim (20) via at least one spoke (95) of the steering wheel (2),
- a display device (30) arranged on the steering wheel rim (20) for displaying driving information which comprises at least one display (32) for generating optical signals, wherein
- the display device (30) is fastened to the steering wheel rim (20) by means of a fastening means,
- wherein the steering wheel rim (20) comprises a base body (21) which is at least partly surrounded by a material (22) that is particularly softer than the material of the base body (21), and
- wherein the display device (30) is fastened to the base body (21) by means of the fastening means, and
- wherein the fastening means comprises at least a fastening region (41) formed on the base body (21),
**characterized in that**
the at least one fastening region (41) protrudes from the base body (21) and comprises at least one through-opening (42), particularly in the form of a borehole, for providing a form-fit and/or force-fit connection between the display device (30) and the base body (21), wherein the at least one fastening region (41) protrudes prolongation-like across the extension direction (R) towards the hub body (94).

2. Steering wheel assembly according to claim 1, **characterized in that** the display device (30) comprises an upper first shell (31) having a visible surface facing outwards, that - with respect to a built-in state of the steering wheel assembly (1) - faces a driver.

3. Steering wheel assembly according to claim 2, **characterized in that** the upper first shell (31) comprises a cut-out (33) or a transparent or a translucent region (33), so that said optical signals are visible.

4. Steering wheel assembly according to claim 2 or 3, **characterized in that** the upper first shell (31) is fastened to the base body (21) by means of a pin (44) reaching through the through-opening (42), wherein the pin (44) is formed as a screw.

5. Steering wheel assembly according to one of the claims 2 to 4 when referred back to claim 3, **characterized in that** a lower shell (34) having a visible surface (34a) facing outwards is provided, that faces away from the surface (31 a) of the upper first shell (31).

6. Steering wheel assembly according to the claims 4 and 5, **characterized in that** the lower shell (34) is fastened to the upper first shell (31) by means of the pin (44), so that both of the shells (31, 34) encompass the base body (21) in cross section.

7. Steering wheel assembly according to one of the preceding claims, **characterized in that** the fastening means comprise a clip connection between the display device (30) and the base body (21) for preventing a relative movement between the display device (30) and the base body (21), and particularly **in that** the display device (30) comprises at least one circuit support (35), and **in that** the circuit support (35) is fastened to the steering wheel rim (20) by means of the clip connection (43).

8. Steering wheel assembly according to one of the preceding claims, **characterized in that** the display device (30) comprises a circuit support (35) as well as damping means (36) for damping mechanical vibrations of the circuit support (35), wherein particularly the damping means (36) counteract a vibration of the display device (32) and the circuit support (35) against each other, and wherein particularly the damping means (36) comprise a mechanically cushioning material, that is arranged between the display device (32) and the circuit support (35).

9. Steering wheel assembly according to one of the preceding claims, **characterized by** an upper second and an upper third shell (37, 38) for covering the base body (21), each having a surface (37a, 38a) facing outwards, which surfaces - with respect to a built-in state of the steering wheel assembly (1) - face a driver.

10. Steering wheel assembly according to claim 9, **characterized in that** the upper first shell (31) is arranged between the upper second and the upper third shell (37, 38) along an extension direction (R) of the steering wheel rim (20).

11. Steering wheel assembly according to claim 5 and according to claim 9 or 10, **characterized in that** the upper second shell (37) and the upper third shell (38) are each connected to the lower shell (34), so that the upper second shell (37) and the upper third shell (38) encompass together with the lower shell (34) the base body (21) in cross section, respectively.

12. Steering wheel assembly according to one of the preceding claims, **characterized by**
- at least one electrical connection device (50) for electrically connecting the display device (30) to an assembly of the motor vehicle; as well as
- at least one connection element (51), by means of which the display device (30) is electrically connected to the connection device (50).

13. Steering wheel assembly according to one of the preceding claims, **characterized by** a display (32) of the display device (30) for generating an optical signal for displaying driving information on a display side (32a) of the display (32) facing an observer, wherein particularly the steering wheel rim (20) is designed such that ambient light for background lighting can reach a side (32b) of the display (32) facing away from the display side (32a) or that the steering wheel rim (20) is designed such that ambient light for background lighting can reach from the display side (32a) facing the observer a side (32b) of the display (32) facing away from the display side (32a)

14. Steering wheel assembly according to one of the preceding claims, **characterized in that** a light source (80) for background lighting of the display (32) is provided on a side (32b) of the display (32) facing away from the display side (32a).

15. Steering wheel assembly according to one of the preceding claims, **characterized in that** the display (32) is formed as a self-luminous display, particularly in the form of an OLED.

## Revendications

1. Ensemble formant volant pour un véhicule automobile, comprenant
- un volant (2) pour diriger le véhicule automobile, ledit volant (2) comprenant une couronne de volant (20) circonférentielle le long d'une direction d'extension (R), au moyen de laquelle il peut être actionné,
- un corps de moyeu (94) du volant (2), qui est relié à la couronne de volant (20) via au moins un rayon (95) du volant (2),
- un dispositif d'affichage (30) agencé sur la couronne de volant (20) pour afficher des informations de fonctionnement, qui comprend au moins un affichage (32) pour engendrer des signaux optiques, dans lequel
- le dispositif d'affichage (30) est fixé sur la couronne de volant (20) via des moyens de fixation,
- la couronne de volant (20) comprend un corps de base (21) qui est entouré au moins partiellement par un matériau (22) qui est en particulier plus tendre que le matériau du corps de base (21), et
- le dispositif d'affichage (30) est fixé sur le corps de base (21) via les moyens de fixation, et
- les moyens de fixation comprennent au moins une zone de fixation (41) réalisée sur le corps de base (21),
**caractérisé en ce que** ladite au moins une zone de fixation (41) dépasse du corps de base (21) et comporte au moins une ouverture traversante (42), en particulier sous la forme d'un perçage, pour établir une liaison à coopération de formes et/ou à coopération de forces entre le dispositif d'affichage (30) et le corps de base (21), ladite au moins une zone de fixation (41) dépassant transversalement à la direction d'extension (R) à la manière d'un prolongement en direction du corps de moyeu (94).

2. Ensemble formant volant selon la revendication 1, **caractérisé en ce que** le dispositif d'affichage (30) comprend une première coque supérieure (31) avec une surface visible (31a) tournée vers l'extérieur qui, par référence à la situation de montage de l'ensemble formant volant (1), est tournée vers un conducteur.

3. Ensemble formant volant selon la revendication 2, **caractérisé en ce que** la première coque supérieure (31) comporte une découpe (33) ou une zone transparente ou translucide (33), de telle manière que les signaux optiques précités sont visibles.

4. Ensemble formant volant selon la revendication 2 ou 3, **caractérisé en ce que** la première coque supérieure (31) est immobilisée sur le corps de base (21) au moyen d'une tige (44) qui traverse l'ouverture traversante (42), ladite tige (44) étant en particulier réalisée sous la forme d'une vis.

5. Ensemble formant volant selon l'une des revendications 2 à 4, **caractérisé en ce qu'**il est prévu une coque inférieure (34) avec une surface visible (34a) tournée vers l'extérieur, qui est détournée de la surface (31a) de la première coque supérieure (31).

6. Ensemble formant volant selon les revendications 4 et 5, **caractérisé en ce que** la coque inférieure (34) est immobilisée au moyen de la tige (44) sur la première coque supérieure (31), de telle manière que les deux coques (31, 34) entourent en section transversale le corps de base (21).

7. Ensemble formant volant selon l'une des revendications précédentes, **caractérisé en ce que**, pour empêcher un mouvement relatif entre le dispositif d'affichage (30) et le corps de base (21), les moyens de fixation comprennent une liaison à clips (43) entre le dispositif d'affichage (30) et le corps de base (21), et en particulier **en ce que** le dispositif d'affichage (30) comprend au moins un porte-commutateur (35), et **en ce que** le porte-commutateur (35) est immobilisé sur la couronne de volant (20) au moyen de la liaison à clips (43).

8. Ensemble formant volant selon l'une des revendications précédentes, **caractérisé en ce que** le dispositif d'affichage (30) comprend une porte-commutateur (35) ainsi que des moyens d'amortissement (36) pour amortir les oscillations mécaniques du porte-commutateur (35), lesdits moyens d'amortissement (36) s'opposant en particulier à des oscillations réciproques de l'affichage (32) et du porte-commutateur (35), et lesdits moyens d'amortissement (36) comprenant en particulier un matériau d'amortissement mécanique, qui est agencé entre l'affichage (32) et le porte-commutateur (35).

9. Ensemble formant volant selon l'une des revendications précédentes, **caractérisé par** une deuxième coque supérieure et par une troisième coque supérieure (37, 38) pour l'habillage du corps de base (21), présentant chacune une surface (37a, 38a) tournée vers l'extérieur qui, par référence à une situation de montage de l'ensemble formant volant (1), est tournée vers un conducteur.

10. Ensemble formant volant selon la revendication 9, **caractérisé en ce que** la première coque supérieure (31) est agencée, le long d'une direction d'extension (R) de la couronne de volant (20), entre la deuxième coque supérieure et la troisième coque supérieure (37, 38).

11. Ensemble formant volant selon la revendication 5 et selon la revendication 9 ou 10, **caractérisé en ce que** la deuxième coque supérieure (37) et la troisième coque supérieure (38) sont reliées chacune avec la coque inférieure (34), de telle manière que la deuxième coque supérieure (37) et la troisième coque supérieure (38) entourent en section transversale le corps de base (21), respectivement conjointement avec la coque inférieure (34).

12. Ensemble formant volant selon l'une des revendications précédentes, **caractérisé par**
- au moins une unité de connexion électrique (50) pour la connexion électrique du dispositif d'affichage (30) avec un ensemble structurel du véhicule automobile ; et
- au moins un élément de raccordement (51) au moyen duquel le dispositif d'affichage (30) est raccordé électriquement à l'unité de connexion (50).

13. Ensemble formant volant selon l'une des revendications précédentes, **caractérisé par** un affichage (32) du dispositif d'affichage (30) pour engendrer un signal optique en vue de la représentation d'informations de fonctionnement sur un côté d'affichage (32a), tourné vers un observateur, de l'affichage (32), et la couronne de volant (20) est en particulier ainsi conçue que la lumière environnante est capable de parvenir, en vue d'un rétroéclairage, sur un côté (32b) de l'affichage (32) détourné du côté d'affichage (32a), ou en ce que la couronne de volant (20) est ainsi conçue que la lumière environnante est capable de parvenir, en vue d'un rétroéclairage du côté d'affichage (32a) tourné vers l'observateur, vers un côté (32b) de l'affichage (32) qui est détourné du côté d'affichage (32a).

14. Ensemble formant volant selon l'une des revendications précédentes, **caractérisé en ce qu'**il est prévu une source de lumière (80) pour le rétroéclairage de l'affichage (32) sur un côté (32b) de l'affichage (32) détourné du côté d'affichage (32a).

15. Ensemble formant volant selon l'une des revendications précédentes, **caractérisé en ce que** l'affichage (32) est réalisé sous forme d'affichage à auto-éclairage, en particulier sous la forme d'une diode dite "OLED".
